# EUROPÄISCHE PATENTSCHRIFT

(11) **EP 1 837 355 B1**
(45) Veröffentlichungstag und Bekanntmachung des Hinweises auf die Patenterteilung: **27.07.2016**
(21) Anmeldenummer: 07005744.3
(22) Anmeldetag: 21.03.2007
(51) Int. Cl.: C08G 18/28, C08G 18/42, C08G 18/79

(54) **ADDITIONSVERBINDUNGEN ALS DISPERGIERMITTEL UND DISPERSIONSSTABILISATOREN**
ADDITION COMPOUNDS AS DISPERSANTS AND DISPERSION STABILISERS
COMPOSÉS D'ADDITION EN TANT QU'AGENTS DISPERSANTS ET STABILISATEURS DE DISPERSION

(30) Priorität: 22.03.2006 DE 102006012999
(43) Veröffentlichungstag der Anmeldung: 26.09.2007
(73) Patentinhaber: BYK-Chemie GmbH, 46483 Wesel (DE)
(72) Erfinder: Haubennestel, Karlheinz, 46487 Wesel (DE); Mößmer, Stefan, 46487 Wesel (DE); Pritschins, Wolfgang, 46487 Wesel (DE); Launag, Thomas, 46562 Voerde (DE)
(74) Vertreter: Leifert & Steffan

(56) Entgegenhaltungen:
- EP-A- 0 191 915
- EP-A- 1 593 700
- EP-A- 1 710 228
- EP-A- 1 832 573
- EP-A1- 0 136 411
- DE-B- 1 051 862
- DE-B- 1 110 722
- BEYER/WALTER: "LEHRBUCH DER ORGANISCHEN CHEMIE", 1984 page 248, * page 248 *

## Beschreibung

Die vorliegende Erfindung betrifft als Dispergiermittel und als Dispersionsstabilisatoren geeignete Additionsverbindungen und deren Salze. Die Erfindung betrifft weiterhin Verfahren zur Herstellung dieser Additionsverbindungen, deren Verwendung als Dispergiermittel und Dispersionsstabilisatoren für organische und anorganische Pigmente sowie Füllstoffe in organischen und wässrigen Systemen und in flüssige Systeme einzuarbeitende pulver- oder faserförmige Feststoffe, die mit solchen Dispergiermitteln beschichtet sind.

Dispergiermittel eignen sich im Allgemeinen zur Stabilisierung von Feststoffteilchen in Bindemitteln, Lacken, Pigmentpasten, Kunststoffen und Kunststoffmischungen, zur Reduktion der Viskosität solcher Systeme sowie zur Verbesserung der Fliesseigenschaften.

Um Feststoffe in flüssige Medien einbringen zu können, sind hohe mechanische Kräfte erforderlich. Es ist üblich, Dispergiermittel einzusetzen, um die Dispergierkräfte zu erniedrigen und um den zur Deflockulierung der Feststoffteilchen notwendigen Gesamtenergieeintrag in das System und damit auch die Dispergierzeit so gering wie möglich zu halten. Bei solchen Dispergiermitteln handelt es sich um oberflächenaktive Stoffe, anionischer, kationischer oder neutraler Struktur. Diese Stoffe werden in kleiner Menge entweder direkt auf den Feststoff aufgebracht oder dem Dispergiermedium zugesetzt. Bekannt ist weiterhin, dass es, auch nach vollständiger Deflockulierung der Feststoffagglomerate in Primärteilchen, nach dem Dispergierprozess zu Reagglomerationen kommt, wodurch der Dispergieraufwand teilweise oder vollständig zunichte gemacht wird. Als Folge der unzulänglichen Dispergierung bzw. durch Reagglomeration kommt es zu unerwünschten Effekten wie: Viskositätsanstieg in flüssigen Systemen, Farbtondrift und Glanzverluste in Lacken und Beschichtungen sowie der Verringerung der mechanischen Festigkeit in Kunststoffen.

Eine Vielzahl verschiedener Substanzen werden heute als Dispergiermittel für Pigmente und Füllstoffe verwendet. Neben einfachen, niedermolekularen Verbindungen wie z. B. Lecithin, Fettsäuren und deren Salzen und Alkylphenolethoxylaten werden auch komplexe Strukturen als Dispergiermittel eingesetzt. Hier sind es neben carboxyfunktionellen Verbindungen speziell amino- und amidfunktionelle Systeme, die breite Verwendung innerhalb der Dispergiermittel einnehmen. In der EP 158 406 und EP 208 041 werden z. B. amino- und amidfunktionelle Poly- und Oligocopolymere auf der Basis von Polyaminen und Polycaprolactonen zur Dispergierung von Pigmenten eingesetzt, bei denen alle reaktiven Aminogruppen in Amidgruppen umgewandelt sind.

Diese Produkte stellen aber komplexe und schlecht reproduzierbare Reaktionsgemische dar und weisen sehr schlechte Löslichkeiten in Lösemitteln und unzulängliche Verträglichkeiten mit Bindemitteln und anderen Harzen auf. Die EP 0 713 894 beschreibt die Verwendung von aminofunktionellen Polylactonen für Überzüge und Druckfarben. Weiterhin werden aminfunktionelle Polyacrylate (EP 0 311 157) zur Stabilisierung von organischen und anorganischen Pigmenten eingesetzt.

Polymere neutrale Dispergiermittel auf der Basis von Polyurethanen sind z. B. in der EP 1 453 875 beschrieben und umfassen als Dispergiermittel lineare, z.T. kettenverlängerte Polyurethane, welche durch Umsetzung von Diisocyanaten mit Oligooxyalkylenmonoalkoholen und gegebenenfalls mit Diolen und/oder Diaminen erhalten werden. Die US 6,509,409 führt Additionsprodukte von Polyisocyanaten mit Poly(oxyalkylencarbonyl)einheiten, welche sich von ε-Caprolacton und δ-Valerolacton ableiten, als Dispergiermittel für Farben und Druckfarben auf. Die WO 99/41320 A1 offenbart Tinten für den Tintenstrahldruck, die als Dispergiermittel lineare Polyurethane mit z. B. Polyoxyalkylenoxideinheiten enthalten, welche endständig säurefunktionelle Gruppen tragen können.

Die EP 0 741 156 A1 beschreibt die Herstellung von hydroxyfunktionellen PolyurethanPolyharnstoffen und deren Verwendung als Dispergiermittel.

Die Patentschrift EP 0 270 126 beschreibt Additionsverbindungen als Dispergiermittel und Dispersionsstabilisatoren mit nicht-basischen Haftgruppen, erhältlich durch Umsetzung von Polyisocyanaten mit Hydroxyverbindungen und Zerewitinoff Wasserstoff enthaltenden Verbindungen sowie mindestens eine saure funktionelle Gruppierung, Hydroxy- oder Alkoxysilylgruppe enthaltende Verbindung. Außerdem werden basische Dispergiermittel auf der Basis von Polyisocyanaten in der EP 0 154 678, der EP 318 999 und der EP 0 438 836 beschrieben. Diese Produkte werden durch Addition von Monohydroxyverbindungen, diisocyanatfunktionellen Verbindungen und Verbindungen mit einer tertiären Aminogruppe an die vorliegenden NCO-Gruppen von Isocyanurat-, Biuret-, Urethan- und/oder Allophanatgruppen aufweisenden Polyisocyanaten hergestellt. Die EP 0 826 753 beschreibt Additionsprodukte auf Basis von Polyisocyanaten mit einer Funktionalität zwischen 1,7 und 2,5 mit Monohydroxyverbindungen, Verbindungen mit einer tertiären Aminogruppe und di- oder trifunktionellen Verbindungen, wobei die nach der Umsetzung vorliegenden NCO-Gruppen durch Sekundärreaktionen bis auf einen Restgehalt von maximal 1,0 Gew.-% abreagiert werden und wobei es sich bei den Sekundärreaktionen um Dimerisierungs- und Trimerisierungsreaktionen handelt. Diese Systeme stellen aber aufgrund von vielen möglichen Nebenreaktionen bei ihrer Herstellung sehr komplexe und wenig definierte Reaktionsmischungen dar, mit den sich daraus ergebenden Nachteilen, wie sehr eingeschränkten Verträglichkeiten und schlechten Löslichkeiten. Insbesondere stellt die Umsetzung der NCO-Gruppen mit aminhaltigen Verbindungen einen schlecht zu beherrschenden Reaktionsschritt dar, der häufig zu unerwünschten Vernetzungen und zu Gelbildungen führt, da diese Vernetzungsreaktionen durch Amine, insbesondere tertiäre Amine, katalysiert werden. Daher lassen sich diese Reaktionen nur in stark verdünnten Lösungen durchführen und die Endprodukte weisen sehr niedrige Festkörpergehalte von in der Regel unter 50% und in vielen Fällen sogar nur von 20-30% auf. Die dadurch über diese Produkte eingebrachten großen Lösemittelmengen führen in modernen Beschichtungssystemen aber zu erheblichen Problemen, da im Zuge der fortschreitenden Bemühungen umweltverträgliche Systeme zu erzeugen, die Notwendigkeit besteht, die Lösungsmittelmenge soweit wie möglich zu senken (z. B. bei Pigmentkonzentraten, high-solid und ultra-high-solid Lacken), oder sogar ganz auf organische Lösungsmittel zu verzichten. Der letzte Punkt ist von besonderer Bedeutung, da organische Lösemittel aus Gründen der Umweltbelastung zunehmend unattraktiv geworden sind und daher weitgehende VOC-Freiheit gewünscht wird (VOC = volatile organic compounds). Die nach diesen Verfahren anfallenden Zwischenprodukte sind aufgrund der stets noch vorhandenen reaktiven NCO-Gruppen nicht über längere Zeit lagerfähig und müssen in der Regel sofort weiter umgesetzt werden, so dass eine wirtschaftlich wünschenswerte Lagerhaltung von Vorprodukten nicht möglich ist. Die EP 1 593 700 beschreibt Additionsverbindungen ohne die obigen Nachteile, welche erhältlich sind durch die Umsetzung von uretdiongruppenhaltigen Polyisocyanaten in einem ersten Schritt mit gegenüber Isocyanaten reaktiven Verbindungen. In einem zweiten Reaktionsschritt werden gezielt die Uretdiongruppen mit Aminen oder Polyaminen, welche tertiäre Amineinheiten enthalten, zur Reaktion gebracht, wobei gegebenenfalls nach dieser Umsetzung noch reaktive Aminogruppen mit gegenüber Aminogruppen reaktiven Verbindungen in einer Nachfolgereaktion umgesetzt werden. Diese Verbindungen zeichnen sich durch eine erhöhte Lagerstabilität der Zwischenprodukte aus, da nach der ersten Umsetzung keine freien NCO-Gruppen mehr enthalten sind. Allerdings können Dispergiermittel, welche tertiäre Aminogruppen aufweisen oder allgemein basische Gruppen enthalten, nachteilig sein in bestimmten Anwendungsgebieten, in denen solche Gruppierungen zu Wechselwirkungen mit dem umgebenden Medium führen wie zum Beispiel Verringerung der Lagerstabilität von 2-Komponenten-Polyurethansystemen durch reaktionsbeschleunigende Wirkung oder Verstärkung des Polymerabbaus von Polyvinylchlorid bei thermischer Belastung oder Härtungsverzögerungen durch Neutralisation saurer Katalysatoren bei sauer katalysierten Systemen wie melaminvernetzten Beschichtungen z. B. bei Coil-Coating-Anwendungen auf Polyester/Melamin- oder Alkyd/Melamin-Basis.

Die oben vorgestellten Dispergiermittel stellen oft nur Teillösungen für diese Probleme dar. Aufgrund der Vielzahl der heute verwendeten anorganischen und organischen Pigmente und Füllmaterialien ist eine hinreichende Stabilisierung der zu dispergierenden Feststoffteilchen durch desorptionsstabile Belegung der Oberfläche nicht ausreichend gewährleistet. Somit kommt es zu Agglomerationen, da die notwendige effiziente sterische Abschirmung fehlt.

Der vorliegenden Erfindung liegt daher die Aufgabe zugrunde, die zuvor beschriebenen Nachteile bekannter Dispergiermittel zu beseitigen, d.h. Dispergieradditive zu entwickeln, die bei guter Stabilisierung von Pigmenten oder Füllstoffen die Mahlgutviskosität der Lacke, Pasten oder Kunststoffformulierungen so weit senken, dass eine Verarbeitung bei hohem Füllgrad möglich ist. Gleichzeitig muss speziell bei Pigment- und Füllstoffpasten eine breite Verträglichkeit gewährleistet sein, um diese in vielen unterschiedlichen Bindemitteln und Überzugsmaterialien einsetzen zu können. Weiterhin ist es erforderlich, dass die verwendeten erfindungsgemäßen Dispergieradditive eine flockulationsfreie Mischbarkeit der Pasten bzw. der mit diesen Pasten hergestellten Bindemittel, untereinander ermöglichen.

Überraschenderweise hat es sich gezeigt, dass eine deutliche Verbesserung in der Dispergierung und Stabilisierung von Pigmenten oder Füllstoffteilchen in Bindemitteln, Pigmentpasten oder Kunststoffformulierungen erreicht werden kann, wenn die nachfolgend beschriebenen Additionsverbindungen eingesetzt werden, die aus uretdiongruppenhaltigen Polyisocyanaten hergestellt werden.

Weiterhin sind diese Dispergiermittel überraschend breit verträglich und können sowohl in polaren wie auch in unpolaren Bindemittelsystemen eingesetzt werden. Sie senken die Viskosität des Mahlgutes während der Dispergierung stark und erlauben es daher, Formulierungen mit hohem Feststoffanteil herzustellen.

Es wurde überraschenderweise gefunden, daß die Aufgabenstellung gelöst werden kann durch die Bereitstellung von Additionsverbindungen, welche erhältlich sind durch die Umsetzung von
a) einem oder mehreren uretdiongruppenhaltigen Polyisocyanaten mit
b) einer oder mehreren Verbindungen der Formel (I)

   Y-(XH)ₙ (I)

   wobei
   XH für eine gegenüber Isocyanaten reaktive Gruppe steht und
   Y für eine nicht gegenüber Isocyanaten reaktive, monomere oder polymere organische Gruppe steht, die eine oder mehrere aliphatische, cycloaliphatische, araliphatische und/oder aromatische Gruppen umfasst,
      wobei Y eine zahlenmittlere Molmasse kleiner 20000 g/mol besitzt und n für 1, 2 oder 3 steht und
      wobei für mindestens 50 mol% der Verbindungen der Formel (I) gilt, dass n = 1 ist,
   unter der Vorgabe, dass mindestens 50% der freien Isocyanatgruppen der Komponente a) mit den Verbindungen der Formel (I) zu einem Uretdiongruppen enthaltendem Zwischenprodukt umgesetzt werden,
   wobei anschließend das Zwischenprodukt mit
c) einer oder mehreren Verbindungen der allgemeinen Formel (II)

   Z-(NHR)ₘ (II)

   zur Reaktion gebracht wird,
   worin
   R für Wasserstoff, einen aliphatischen, cycloaliphatischen, araliphatischen und/oder aromatischen Rest mit bis zu 36 C-Atomen oder einen Polyoxyalkylen-Rest steht,
   m für 1 steht und
   Z einen nicht-basischen Rest mit einer zahlenmittleren Molmasse kleiner 10000 g/mol darstellt und eine oder mehrere der folgenden Bedeutungen hat:
      A) ein C₁-C₅₀-Alkylrest, der linear, verzweigt, gesättigt oder ein bis mehrfach ungesättigt sein kann, ein C₄-C₃₆-Cycloalkylrest oder
      B) ein C₆-C₃₆-Arylrest oder C₇-C₃₆-Aralkylrest oder
      C) Rest einer Polyalkylenoxidverbindung oder
      D) Rest eines gegebenenfalls polyether- und/oder polyesterhaltigen Polysiloxans, wobei Z gegebenenfalls folgende funktionelle Gruppen aufweisen kann:
         - -OH
         - -COOH
         - -SO₃H
         - -PO₃H₂
         - -Si(OR)₃ und -SiR(OR)₂
      wobei die Hydroxylgruppen gegebenenfalls mit Polyphosphorsäure oder P₂O₅ oder mit Polycarbonsäuren mit mindestens zwei Carboxylgruppen oder deren Anhydriden in einer solchen Menge umgesetzt werden, dass auf jede umzusetzende OH-Gruppe mindestens 0,8 Moleküle Polycarbonsäure oder Polycarbonsäureanhydrid eingesetzt wird;
      sowie Salze der Additionsverbindungen,
   unter der Maßgabe, daß alle gegebenenfalls noch vorhandenen freien NCO-Gruppen und mindestens 20% der ursprünglich eingesetzten Uretdiongruppen mit Z-(NHR)ₘ zur Reaktion gebracht werden.

Die hier beschriebenen erfindungsgemäßen Additionsverbindungen können gezielt und mit weniger Nebenprodukten hergestellt werden als übliche aus dem Stand der Technik, wie z. B. aus der EP 0 154 678, bekannte Produkte und enthalten keine tertiären Amingruppierungen. Die im ersten Reaktionsschritt hergestellten Zwischenprodukte enthalten bevorzugt keine freien NCO-Gruppen mehr und sind daher beliebig lange lagerstabil, was eine wirtschaftlichere Herstellung ermöglicht. Insbesondere die Umsetzung mit den aminofunktionellen Verbindungen Z-NHR läuft ohne unerwünschte Vernetzungen ab, da hierbei bevorzugt keine freien NCO-Gruppen zugegen sind.

### Uretdiongruppenhaltige Polyisocyanate (Komponente (a))

Für die Herstellung der Additionsverbindungen gemäß der Erfindung werden als uretdionhaltige Polyisocyanate (Komponente a)) die auf diesem technischen Gebiet aus dem Stand der Technik bekannten Verbindungen eingesetzt, wie sie zum Beispiel in der EP 0 795 569 als Ausgangsverbindungen beschrieben werden. Die Herstellung dieser Uretdionpolyisocyanate ist z. B. in DE 16 70 720, EP 45 995, EP 99 976, EP 1 174 428 und der dort zitierten Literatur beschrieben. Bevorzugt besitzen diese Polyisocyanate eine mittlere Funktionalität von 2. Besonders bevorzugt sind dabei cyclische Dimerisierungsprodukte von 1,4-Diisocyanatobutan, Hexamethylendiisocyanat (HDI), 2-Methyl-1,5-diisocyanatopentan, 1,5-Diisocyanato-2,2-dimethylpentan, 2,2,4- oder 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, - 1-Isocyanato-3,3,5-trimethyl-5-isocyanatomethyl-cyclohexan (Isophorondiisocyanat, IPDI), 4,4'-Diisocyanatodicyclohexylmethan, Toluylendiisocyanat (TDI), 1-Isocyanato-1-methyl-4(3)isocyanatomethylcyclohexan, Bis-(isocyanatomethyl)-norbornan und 1,3- und 1,4-Bis-(2-isocyanato-prop-2-yl)-benzol (TMXDI) oder Mischungen solcher Diisocyanate. Ganz besonders bevorzugt sind cyclische Dimerisierungsprodukte von Hexamethylendiisocyanat (HDI), welches kommerziell als Desmodur^{®} N 3400 von BAYER verfügbar ist, von Isophorondiisocyanat (IPDI) oder von Toluylendiisocyanat (TDI), erhältlich z. B. als Desmodur^{®} TT/G von der Rhein-Chemie.

Diese Verbindungen stellen Handelsprodukte dar, die häufig nicht in reiner Form vorliegen, sondern die Gemische von Verbindungen ähnlicher Struktur darstellen. Unter "mittlerer Funktionalität von 2" wird verstanden, dass die Handelsprodukte hinsichtlich ausgewählter Reste im Mittel die angegebene Funktionalität von 2 aufweisen. Beispielsweise bedeutet "Funktionalität von 2", dass ein Isocyanatgruppen enthaltendes Molekül im statistischen Mittel 2 freie Isocyanatgruppen enthält. Die mittlere Funktionalität kann man experimentell dadurch ermitteln, dass man das zahlenmittlere Molekulargewicht Mn bestimmt. Außerdem bestimmt man die NCO-Zahl und errechnet daraus das NCO-Äquivalentgewicht. Die mittlere Funktionalität ist der Quotient aus dem zahlenmittleren Molekulargewicht und dem NCO-Äquivalentgewicht.

Die uretdiongruppenhaltigen Polyisocyanate (Komponente a)) werden erfindungsgemäß mit Verbindungen der obigen Formel (I) (Komponente b)) umgesetzt.

### Verbindungen der Formel (I) (Komponente (b))

Die Verbindungen der Formel (I) sind dadurch gekennzeichnet, dass sie eine, zwei oder drei isocyanatreaktive Gruppen XH enthalten. Beispiele für XH sind -OH, -NH₂, -NHR, -SH oder -COOH. Bevorzugt steht XH für -OH, -NH₂ oder -NHR. Besonders bevorzugt sind diese funktionellen Gruppen Hydroxylgruppen, weil diese Verbindungen leicht zugänglich und/oder im Handel erhältlich sind. Auch sind die erhaltenen Reaktionsprodukte gewöhnlich gut in solchen Lösungsmitteln löslich, die beim späteren Einsatz der Additionsverbindungen gemäß der Erfindung zur Anwendung kommen.

Als Verbindungen der Formel (I) können aliphatische, cycloaliphatische, araliphatische und/oder aromatische Verbindungen eingesetzt werden. Es können auch Gemische solcher Verbindungen eingesetzt werden. Es können geradkettige und verzweigte aliphatische oder araliphatische Verbindungen eingesetzt werden. Diese können gesättigt oder ungesättigt sein. Gesättigte Verbindungen sind bevorzugt. Die Wasserstoffatome können teilweise durch Halogenatome, vorzugsweise durch Fluor und/oder Chlor ersetzt sein.

Beispiele für Verbindungen der Formel (I) sind geradkettige oder verzweigte Alkohole wie Methanol, Ethanol, Butanol, Ethylhexanol, Decanol, Isotridecylalkohol, Laurylalkohol, Stearylalkohol, Isobornylalkohol, Benzylalkohol, Propargylalkohol, Oleylalkohol, Linoleylalkohol, Oxoalkohole, Neopentylalkohol Cyclohexanol, Fettalkohole, Alkylphenole, Monophenyldiglykol, Alkylnaphthole, Phenylethanol, hydroxyfunktionelle Vinylverbindungen wie zum Beispiel Hydroxybutylvinylether, hydroxyfunktionelle Acrylate oder Methacrylate wie zum Beispiel Hydroxyethylacrylat, Hydroxyethylmethacrylat, Hydroxybutyl(meth)acrylat, Hydroxyethylpyrrolidin und Hydroxyethylethylenharnstoff sowie Polyolefinpolyole, wie gegebenenfalls hydrierte, hydroxyfunktionelle Polybutadiene, Polypropylene, Ethylen/Butylen-Copolymere oder Polystyrole mit einer mittleren Funktionalität von 1 bis 3. Beispiele für entsprechende Handelsprodukte sind die unter der Bezeichnung Polytail® von Mitsubishi Chemical erhältlichen hydroxyterminierten hydrierten Polybutadiene oder die hydroxyterminierten Ethylen/Butylen-Copolymere Kraton® Liquid L-1203, L-1302 und L-2203 von Kraton Polymers oder die als NISSO-PB erhältlichen flüssigen Polybutadiene von Nippon Soda Co. oder die von Baker Petrolite als Unilin® Alcohols erhältlichen gesättigten, langkettigen, linearen, weitgehend primären Alkohole mit Kettenlängen bis zu C50 und Molekulargewichten von 375 bis. 700 und deren unter der Bezeichnung Unithox® erhältlichen Ethoxylate. Weitere Beispiele sind unter anderem in der EP-A-154 678 beschrieben.

Als Verbindungen der Formel (I) können auch solche eingesetzt werden, die Ester, Ether, Urethan, Carbonat und/oder Siloxan-Gruppen oder Kombinationen dieser Gruppen enthalten. Es kann sich also zum Beispiel um Polyether, Polyester, Polyurethane, Polycarbonate, Polysiloxane oder zum Beispiel gemischte Polyether-Polyester handeln.

Polyester können zum Beispiel durch Umsetzung von Dicarbonsäuren, Dicarbonsäureanhydriden und/oder Dicarbonsäurechloriden mit Diolen und mono-, di- oder trifunktionellen Startkomponenten hergestellt werden. Die Bildung von Dihydroxypolyestern kann bei Bedarf durch Einsatz entsprechend stöchiometrischer Mengen an Monohydroxyverbindungen, wie sie oben beschrieben wurden, zurückgedrängt werden.

Bevorzugte Polyester der Formel (I) sind solche, die durch Polymerisation einer oder mehrerer, gegebenenfalls alkylsubstituierter Hydroxycarbonsäuren und/oder deren Lactone wie zum Beispiel Propiolacton, Valerolacton, Caprolacton mittels einer Mono-, Di- oder Trihydroxy-Startkomponente, wie in EP-A-154 678 (US-A-4 647 647) beschrieben, erhalten werden können. Bevorzugt besitzen diese ein zahlenmittleres Molekulargewicht Mn von 150 bis 5000 g/mol. Als Startkomponente sind im Prinzip alle anderen als Verbindungen der Formel (I) aufgeführten Verbindungen einsetzbar. Die als Startkomponente verwendeten mono-, di- oder trifunktionellen Alkohole besitzen vorzugsweise 1 bis 30, besser noch 4 bis 14 Kohlenstoffatome. Beispielhaft genannt sind n-Butanol, längerkettige, gesättigte und ungesättigte Alkohole wie Propargylalkohol, Oleylalkohol, Linoleylalkohol, Oxoalkohole, Cyclohexanol, Phenylethanol, Neopentylalkohol, Ethylenglykol, Propylenglykol, Glycerin aber auch fluorierte Alkohole, hydroxyfunktionelle Polydialkylsiloxane, hydroxyfunktionelle Vinylverbindungen wie zum Beispiel Hydroxybutylvinylether, hydroxyfunktionelle Acrylate oder Methacrylate wie zum Beispiel Hydroxyethylacrylat, Hydroxyethylmethacrylat, Hydroxybutyl(meth)acrylat, hydroxyfunktionelle Polyalkylenglykolacrylate und -methacrylate. Es können auch Alkohole der zuvor beschriebenen Art und substituierte und unsubstituierte Phenole durch Alkoxylierung nach bekannten Verfahren mit Alkylenoxiden wie zum Beispiel Ethylenoxid, Propylenoxid, Butylenoxid und/oder Styroloxid in Polyoxyalkylenmonoalkyl-, Polyoxyalkylenmonoaryl-, Polyoxyalkylenmonoaralkyl- und Polyoxyalkylenmonocycloalkylether überführt werden und diese Hydroxypolyether in der vorbeschriebenen Art als Startkomponente für die Lactonpolymerisation eingesetzt werden. Jeweils können auch Gemische von vorgenannten Verbindungen eingesetzt werden. Die Lactonpolymerisation wird nach bekannten Verfahren, initiiert durch z. B. p-Toluolsulfonsäure oder Dibutylzinndilaurat, bei Temperaturen von etwa 70° C bis 180°C durchgeführt. Besonders bevorzugt sind Polyester auf ε-Caprolacton-Basis, gegebenenfalls in Kombination mit δ-Valerolacton.

Als Verbindungen der Formel (I) können auch Mono-, Di- oder Trihydroxypolyether eingesetzt werden. Diese können zum Beispiel durch Alkoxylierung der anderen als Verbindungen der Formel (I) beschriebenen Verbindungen wie Alkanolen, Cycloalkanolen, Phenolen oder den vorstehend beschriebenen Hydroxypolyestern mit Alkylenoxiden wie Ethylenoxid-, Propylenoxid, Butylenoxid, Styroloxid oder Mischungen davon erhalten werden. Im Falle von gemischten Polyethern können diese statistisch oder in Blöcken angeordnet sein. Bevorzugt sind Polyether auf Basis von Ethylenoxid, Propylenoxid und deren Mischungen. Bevorzugt sind monohydroxyfunktionelle Polyoxyalkylenmonoalkohole wie Allylpolyether wie z. B. Polyglykol A 350, Polyglykol A 500, Polyglykol A 1100, Polyglykol A 11-4, Polyglykol A 20-10 oder Polyglykol A 20-20 der Clariant AG oder Pluriol^{®} A 010 R, Pluriol^{®} A 11 RE, Pluriol^{®} A 13 R, Pluriol^{®} A 22 R oder Pluriol^{®} A 23 R der BASF AG, Vinylpolyether wie z. B. Polyglykol V 500, Polyglykol V 1100 oder Polyglykol V 5500 der Clariant AG, methanolgestartete Polyoxyethylenmonoalkohole wie z. B. Pluriol^{®} A 350 E, Pluriol^{®} A 500 E, Pluriol^{®} A 750 E, Pluriol^{®} A 1020 E, Pluriol^{®} A 2000 E oder Pluriol^{®} A 5010 E der BASF AG, alkanolgestartete Polyoxypropylenmonoalkohole wie z. B. Polyglykol B01/20, Polyglykol B01 / 40, Polyglykol B01/80, Polyglykol B01/120 oder Polyglykol B01/240 der Clariant AG oder Pluriol^{®} A 1350 P oder Pluriol^{®} A 2000 P der BASF AG, und mit verschiedenen Fettalkoholen gestartete Polyalkoxylate mit variablem Alkoxylierungsgrad, wie sie dem Fachmann unter den Handelsnamen Lutensol^{®} A, Lutensol^{®} AT, Lutensol^{®} AO, Lutensol^{®} TO, Lutensol^{®} XP, Lutensol^{®} XL, Lutensol^{®} AP und Lutensol^{®} ON der BASF AG bekannt sind. Bevorzugt werden Polyoxyalkylenmonoalkohole verwendet, welche Ethylenoxid- und/oder Propylenoxid- und/oder Butylenoxidgruppen enthalten und gegebenenfalls mit Styroloxid modifiziert sind. Besonders bevorzugt ist die Verwendung von Polyoxyalkylenmonoalkoholen wie z. B. Polyglykol B 11/50, Polyglykol B 11/70, Polyglykol B 11/100, Polyglykol B 11/150, Polyglykol B 11/300 oder Polyglykol B 11/700 von der Clariant AG, Pluriol^{®} A 1000 PE, Pluriol^{®} A 1320 PE, oder Pluriol^{®} A 2000 PE der BASF AG oder Terralox WA 110 von DOW Chemicals, bei denen es sich um alkanolgestartete Polyoxyalkylene aus Ethylen- und Propylenoxid mit einer terminalen OH-Gruppe handelt.

Als Verbindungen der Formel (I) können auch Polyurethane, Polyether-Polyurethane, Polyester-Polyurethane und/oder Polyether-Polyester-Polyurethane eingesetzt werden, die durch Additionsreaktion von Diisocyanaten mit Dihydroxyverbindungen in Anwesenheit von mono-, di- oder trifunktionellen Startkomponenten erhalten werden können.

Bevorzugte Verbindungen der Formel (I) sind hydroxyfunktionelle Polyether, hydroxyfunktionelle Polyester, hydroxyfunktionelle Polyether-Polyester und/oder aliphatische und/oder cycloaliphatische Alkohole mit 2 bis 30 Kohlenstoffatomen, deren Wasserstoffatome gegebenenfalls teilweise durch Halogen und/oder Arylreste ersetzt sind.

Als Verbindungen der Formel (I) können auch mono-, di- oder trifunktionelle Polysiloxane wie zum Beispiel amino- oder hydroxyfunktionelle Polydialkylsiloxane, die nicht an Siliciumatome gebundene Hydroxylgruppen enthalten, oder Aminoalkylpolysiloxane verwendet werden, die gegebenenfalls polyether- und/oder polyestermodifiziert sein können. Bevorzugt werden Hydroxyalkylpolydimethylsiloxane mit zahlenmittleren Molekulargewichten Mn von zweckmäßig 400 bis 8000, vorzugsweise bis 5000 g/mol und besonders bevorzugt bis 2000 g/mol eingesetzt.

Als Diisocyanat zum Aufbau der urethangruppenhaltigen Verbindungen nach Formel (I) können die aus der Polyurethanchemie an sich bekannten aliphatischen cycloaliphatischen und/oder aromatischen Diisocyanate mit 4 bis 15 Kohlenstoffatomen eingesetzt werden, wie Tetramethylen-, Hexamethylen-, Trimethylhexamethylen-, Dodekamethylen-, Isophoron-Toluylen-, Diphenylmethandiisocyanat, Methylenbis-(4-cyclohexylisocyanat) oder 1,4-Cyclohexanbis(methylisocyanat). Als Hydroxy-verbindungen zum Aufbau der urethangruppenhaltigen Verbindungen nach Formel (I) werden zweckmäßig Diole mit 2 bis 12 Kohlenstoffatomen, Polyoxyalkylenglykole und dihydroxyfunktionelle Polyester mit bevorzugten zahlenmittleren Molekulargewichten von höchstens 2000 g/mol eingesetzt. Als monohydroxyfunktionelle Startkomponente können Alkohole mit bis zu 30 Kohlenstoffatomen, wie sie zur Herstellung der Polyester nach Formel (I) beschrieben sind, aber auch die als Verbindung nach Formel (I) beschriebenen Hydroxypolyester und Hydroxypolyether eingesetzt werden.. Die Polyester besitzen vorzugsweise ein zahlenmittleres Molekulargewicht von 300 bis 5000 g/mol und die Polyether von 200 bis 2000 g/mol.

Der Rest Y kann Carbonatgruppen enthalten, wie sie durch Umsetzung gemäß dem Stand der Technik mit offenkettigen und/oder cyclischen Carbonaten erhalten werden. Geeignet sind zum Beispiel mit Carbonaten modifizierte lineare Polyester oder Polycarbonatdiole, wie sie in der Polyurethanherstellung verwendet werden. Beispiele sind beschrieben in US 4 101 529, EP 0 358 555, oder WO 02/085507. Geeignete Carbonate sind zum Beispiel aliphatische, cycloaliphatische, araliphatische und/oder aromatische Kohlensäurester wie zum Beispiel Dialkylcarbonate wie Dimethylcarbonat, Diethylcarbonat oder Diphenylcarbonat, Catecholcarbonat oder cyclische Alkylencarbonate. Besonders geeignet sind cyclische Alkylencarbonate mit 5- oder 6-gliedrigen Ringen, die gegebenenfalls substituiert sein können. Als Substituenten sind aliphatische, cycloaliphatische und/oder aromatische Gruppen mit bis zu 30 Kohlenstoffatomen bevorzugt. Beispiele für geeignete cyclische Alkylencarbonate sind Ethylencarbonat, Propylencarbonat, Glycerincarbonat, Trimethylencarbonat, 4-Methyltrimethylencarbonat, 5-Methyltrimethylencarbonat, 5,5-Dimethyltrimethylencarbonat, 5,5-Diethyltrimethylencarbonat oder 5-Methyl-5-propyltrimethylencarbonat.

Der Rest Y kann Heteroatome wie O, S, Si und/oder N enthalten und weitere Gruppen tragen, die sich bei der Bildung des Additionsproduktes inert verhalten. Solche Gruppen sind beispielsweise die Carbonsäureamidgruppe (-NHCO-), nicht aktivierte Doppelbindungen oder Harnstoffgruppierungen (-NHCONH-). Der Anteil dieser Gruppen sollte vorzugsweise unter 50 mol%, bevorzugt unter 5 mol% liegen. Besonders bevorzugt sind Verbindungen, die gar keine dieser Gruppen enthalten.

Die gegebenenfalls vorhandenen Ester-, Ether-, Urethan-, Carbonat- und/oder Siloxan-Gruppen können in Blockstruktur (z. B. Polyethylenoxydblock-propylenoxyd-block-ε-caprolacton) oder auch statistisch angeordnet sein.

Als Verbindung der Formel (I) können auch Polyacrylsäureester und/oder Polymethacrylsäureester mit im Mittel bis zu drei NCO-reaktiven Gruppen eingesetzt werden, wie sie durch anionische, kationische oder radikalische Polymerisation von Acrylsäureestern bzw. Methacrylsäureestern erhalten werden. Bevorzugt sind monohydroxyfunktionelle Verbindungen. Monohydroxyfunktionelle Polyacrylsäureester bzw. Polymethacrylsäureester sind solche, die im Mittel eine Hydroxygruppe im Molekül enthalten. Solche Verbindungen sind auf dem vorliegenden Gebiet der Technik bereits zur Herstellung anderer Dispergiermitteln verwendet worden. Derartige Verbindungen sind z. B. in der US-A-4 032 698 oder EP 318 999 beschrieben. Solche Poly(meth)acrylate besitzen vorzugsweise ein zahlenmittleres Molekulargewicht Mn von 300 bis 20000 g/mol, bevorzugter 500 bis 10000. Sie können in Blockstruktur oder auch statistisch angeordnet sein.

Die Carboxylgruppe der monomeren (Meth)acrylate (der Begriff (Meth)acrylate steht für Acrylate und Methacrylate) kann z. B. mit aliphatischen, cycloaliphatischen und/oder aromatischen Alkoholen wie Methanol, Butanol, Cyclohexanol, 2-Ethylhexanol, Lauryl-, Stearyl-, Isobornyl-, Benzylalkohol oder mit Etheralkoholen wie 2-Methoxyethanol, 2-Phenoxyethanol, Tetrahydrofurfurylalkohol, Glycidol oder mit Polyesteralkoholen wie hydroxyfunktionellem Polycaprolacton oder mit Alkoxypolyalkylenglykolen wie Methoxypolyethylenglykol oder Methoxypolypropylenglykol verestert sein. Das zahlenmittlere Molekulargewicht Mn der Veresterungskomponente liegt dabei vorzugsweise unter 2000 g/mol. Zur Herstellung der hydroxyfunktionellen Poly(meth)acrylate können auch Mischungen verschiedener vorstehend beschriebener Monomere eingesetzt werden. Zur Herstellung dieser Poly(meth)acrylate können als Comonomere auch Vinylester wie Vinylacetat, Vinylether wie Vinylethylether, Styrol, Vinyltoluol und/oder Vinylcyclohexan verwendet werden. Die so erhaltenen Copolymere enthalten dabei zweckmäßig nicht mehr als 50 mol% an nicht acrylfunktionellen Comonomeren.

Als Verbindung der Formel (I) können auch hydroxyfunktionelle Poly-2-alkyl-2-oxazoline oder Poly-2-alkyl-2-oxazine fungieren. Bevorzugt werden monohydroxyfunktionelle Verbindungen eingesetzt. Poly-2-alkyl-2-oxazoline oder Poly-2-alkyl-2-oxazine werden, wie dem Fachmann bekannt, durch kationische, ringöffnende Polymerisation von 2-Alkyl-2-oxazolinen oder 2-Alkyl-2-oxazinen mit Initiatoren wie z. B. Para-Toluolsulfonsäure, Methyltosylat oder Methyltriflat, erhalten. Die durch den lebenden kationischen Polymerisationsmechanismus resultierenden Oxazolinium- oder Oxaziniumendgruppen können durch alkalische Hydrolyse über Aminoesterendgruppen in die stabileren Hydroxyamide überführt werden. Ein alternativer Weg zur Herstellung von monohydroxyfunktionellen Poly-2-alkyl-2-oxazolinen oder Poly-2-alkyl-2-oxazinen ist die Polymerisation mit 2-(4-Hydroxyphenyl)-N-methyl-2-oxazoliniumtrifluormethan-sulfonat als initiierender Spezies. (A. Groß, G. Maier, O. Nuyken, Macromol. Chem. Phys. 197, 2811-2826 (1996)). Durch Wahl des Alkylsubstituenten lässt sich die Verträglichkeit steuern. So ist z. B. Poly-2-ethyl-2-oxazolin durch seine Wasserlöslichkeit für hochpolare Systeme geeignet, während z. B. Poly-2-lauryl-2-oxazolin in unpolaren Systemen verträglich ist. Werden Blockcopolymere aus 2-Ethyl-2-oxazolin und 2-Lauryl-2-oxazolin gebildet, so zeichnen sich die Polymere durch eine breite Verträglichkeit aus. Solche Poly-2-alkyl-2-oxazoline oder Poly-2-alkyl-2-oxazine besitzen vorzugsweise ein zahlenmittleres Molekulargewicht Mn von 300 bis 20000 g/mol, bevorzugter 500 bis 10000 g/mol.

Das zahlenmittlere Molekulargewicht eines Rests Y ist kleiner als 20000 g/mol und liegt zweckmäßig bei maximal 10000 g/mol, vorzugsweise bei maximal 5000 g/mol, bevorzugt bei maximal 3500 g/mol und besonders bevorzugt bei maximal,2000 g/mol. Das minimale Molekulargewicht von Y liegt zweckmäßig bei 100 g/mol, bevorzugt bei 150 g/mol, besonders bevorzugt bei 200 g/mol und ganz besonders bevorzugt bei 400 g/mol. Zweckmäßig sollten weniger als 50 mol% der eingesetzten Verbindungen nach Formel (I) ein zahlenmittleres Molekulargewicht von kleiner 100 g/mol besitzen, bevorzugt weniger als 25 mol%, besonders bevorzugt weniger als 15 mol% und ganz besonders bevorzugt 0 mol%.

In Anwendungen, in denen eine breite Verträglichkeit gefragt ist, wie z. B. im Universalpastenbereich, ist es häufig von Vorteil, Additionsverbindungen einzusetzen, die mit Gemischen verschiedener Verbindungen der Formel (I) hergestellt werden. Sollen die erfindungsgemäßen Additionsverbindungen zum Beispiel in Universalabtönpasten für wässrige und unpolare Systeme verwendet werden, ist eine Kombination von wasserlöslichen mit unpolaren Verbindungen der Formel (I) von Vorteil.

Bei der Umsetzung mit den monofunktionellen Verbindungen der Formel (I) werden 50 bis 100 mol%, bevorzugt 75 bis 100 mol% und besonders bevorzugt 100 mol% der ursprünglich eingesetzten freien NCO-Gruppen umgesetzt.

Beispiele für di- oder trifunktionelle Verbindungen der Formel (I) (n = 2 oder 3) sind Diole und Triole bzw. Diamine, Dialkanolamine, Monoalkanolamine mit 2 bis 12 Kohlenstoffatomen, Dihydroxydialkylsulfide und Dihydroxysulfone. Beispiele sind Butandiol, Hexandiol, Cyclohexandimethanol, Neopentylglykol, Ethylenglykol, alkylsubstituierte Dialkanolamine, Glycerin, Trimethylolpropan, Fettsäuredialkanolamide, Thiodiglykol und Di(4-Hydroxyphenyl)sulfon. Eine bevorzugte Gruppe von Verbindungen der Formel (I) sind Polyoxyalkylenglykole zweckmäßig mit Alkylengruppen mit 2 bis 4, vorzugsweise 2 Kohlenstoffatomen, und mit zahlenmittleren Molekulargewichten im Bereich von bevorzugt 200 bis 2000 g/mol und besonders bevorzugt 400 bis 1500 g/mol. Ethoxilate mit 3 Hydroxylgruppen erhält man beispielsweise durch Polymerisation unter Verwendung von trifunktionellen Alkoholen als Starterkomponente. Bevorzugt als Polyoxyalkylenglykole sind Polyethylenglykole.

Als di- oder trifunktionelle Verbindungen der Formel (I) können auch solche eingesetzt werden, die durch Polymerisation eines oder mehrerer Lactone, wie sie bereits erwähnt wurden, mittels Di- oder Trihydroxy-Startkomponenten erhalten werden können. Vorzugsweise haben diese Polyesterpolyole ein zahlenmittleres Molekulargewicht Mn von 800 bis 2000 g/mol. Als Startkomponente ist Butandiol oder Ethylenglykol bevorzugt. Es können aber auch die oben genannten Diole oder Triole als Starterkomponenten in Frage kommen.

Als mehrfachfunktionelle Verbindungen der Formel (I) können Polyurethane, Polyether-Polyurethane, Polyester-Polyurethane und/oder Polyether-Polyester-Polyurethane eingesetzt werden, die durch Additionsreaktion eines Diisocyanates mit einer Dihydroxyverbindung analog zu den entsprechenden monofunktionellen Verbindungen nach Formel (I) erhalten werden können. Vorzugsweise haben diese urethanhaltigen Verbindungen nach Formel (I) eine mittlere Funktionalität von höchstens 2 und ein zahlenmittleres Molekulargewicht von 300 bis 2500 g/mol, bevorzugt von 500 bis 1500 g/mol.
Die di- oder trifunktionellen Verbindungen der Formel (I) bewirken eine Vernetzung zwischen den Reaktionsprodukten aus Polyisocyanat und monofunktionellen-Verbindungen der Formel (I). Beispielsweise können die Ausgangsprodukte in solchen Mengen eingesetzt werden, dass die di- oder trifunktionellen Verbindungen der Formel (I) das Zentrum des Moleküls darstellen, und dass die Polyisocyanate an sie gebunden sind, deren verbleibende Isocyanatgruppen mit monofunktionellen Verbindungen der Formel (I) umgesetzt sind bzw. werden. Es kann naturgemäß auch eine gewisse Übervernetzung oder Untervernetzung vorliegen.

Bei der Umsetzung mit den di- oder trifunktionellen Verbindungen der Formel (I) werden vorzugsweise 0% bis 50% und bevorzugt 0% bis 25% der ursprünglich eingesetzten NCO-Gruppen umgesetzt. Besonders bevorzugte Produkte werden ganz ohne Verwendung von di- oder trifunktionellen Verbindungen der Formel (I) erhalten. Insgesamt werden mit den Verbindungen der Formel (I) mindestens 50%, vorzugsweise 70%, bevorzugt 80%, besonders bevorzugt 90% und ganz besonders bevorzugt 100% der ursprünglich eingesetzten NCO-Gruppen umgesetzt.

Die Umsetzung der Polyisocyanate mit verschiedenen Verbindungen der Formel (I) kann in einem, einzigen Reaktionsschritt oder in mehreren Reaktionsschritten nacheinander durchgeführt werden. Das kann in beliebiger Reihenfolge geschehen. In vielen Fällen ist es allerdings zweckmäßig, das Polyisocyanat nacheinander mit den Komponenten in der Reihenfolge zuerst monofunktionelle und danach polyfunktionelle Verbindungen umzusetzen. Die Isocyanataddition kann, je nach Reaktivität der einzelnen Reaktionspartner, in dem für diese Art von Reaktion üblichen Temperaturbereich von Raumtemperatur bis etwa 150 °C erfolgen. Zur Beschleunigung und Reduzierung von Nebenreaktionen können die nach dem Stand der Technik bekannten und üblichen Katalysatoren, wie tertiäre Amine, wie z. B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z. B. Eisen-(III)-acetylacetonat, Zinnverbindungen, z. B. Zinndiacetat, Zinndioctoat, Zinndilaurat oder die Dialkylderivate von Zinndialkylsalzen aliphatischer Carbonsäuren wie Dibutylzinndiacetat, Dibutylzinndilaurat oder ähnliche, verwendet werden. Diese Katalysatoren werden üblicherweise in Mengen von 0,0001 bis 0,1 Gew.-Teilen pro 100 Gew.-Teile Isocyanat eingesetzt.

### Verbindungen der Formel (II) (Komponente (c))

Nach Umsetzung der freien NCO-Gruppen der uretdiongruppenhaltigen Polyisocyanate mit den Verbindungen der Formel (I) erfolgt die Addition von einer oder mehreren Verbindungen der Formel (II) Z-(NHR)ₘ über die reaktiven Aminogruppen an die Uretdiongruppen und gegebenenfalls noch vorhandene freie NCO-Gruppen. Bei der Umsetzung mit den Verbindungen der Formel (II) werden alle gegebenenfalls noch vorhandenen freien NCO-Gruppen und mindestens 20%, bevorzugt mindestens 50%, besonders bevorzugt mindestens 80% und ganz besonders bevorzugt 100% der ursprünglich eingesetzten Uretdiongruppen zur Reaktion gebracht.

Je nach Reaktivität der eingesetzten Verbindungen wird diese Reaktion vorzugsweise in einem Temperaturbereich von etwa 20°C bis 200°C, noch bevorzugter von 60°C bis 150°C durchgeführt. Hierbei kann das Amin vorgelegt und das Uretdion zugegeben werden. Ebenso kann auch die Aminverbindung zum vorgelegten Uretdion gegeben werden. Gegebenenfalls kann die Addition in Gegenwart von geeigneten Katalysatoren, z. B. Amidinen oder Lewissäuren durchgeführt werden. Eine Übersicht über geeignete Katalysatoren findet sich z. B. in der DE 198 56 878 und der dort zitierten Literatur. Üblicherweise ist eine Verwendung solcher Katalysatoren aber nicht erforderlich. Sind in den Verbindungen Z-(NHR)ₘ noch andere funktionelle Gruppen wie z.B. Hydroxy- oder Carboxyfunktionalitäten oder Phosphonsäuregruppen enthalten, so reagieren diese unter den genannten Reaktionsbedingungen nicht oder nur sehr langsam mit den uretdiongruppenhaltigen Verbindungen, so dass praktisch ausschließlich die Aminofunktion an die Uretdiongruppe unter Erhalt der Hydroxy- oder Carboxyfunktion oder Phosphonsäuregruppe addiert wird.

Charakteristisch für die Verbindungen Z-(NHR)ₘ ist, dass sie pro Molekül erfindungsgemäß eine Aminogruppe mit mindestens einem Zerewitinoff-Wasserstoffatom enthalten, das bevorzugt mit den Uretdionringen reagiert, so dass nach Beendigung der Reaktion bevorzugt keine freien Aminogruppen mehr vorliegen, und dass sie darüber hinaus keine tertiäre Aminogruppe enthalten. Eventuell nach der Umsetzung der uretdiongruppenhaltigen Polymeren mit den Verbindungen Z-(NHR)ₘ noch vorhandene überschüssige reaktive primäre oder sekundäre Aminogruppen lassen sich gegebenenfalls für den Einsatz in Systemen, bei denen Probleme durch solche Restamingehalte wie Verfärbungen oder Topfzeitverkürzungen zu erwarten sind, wie dem Fachmann bekannt ist, mit Verbindungen wie z.B. Carbonsäuren, Carbonsäureanhydriden, Isocyanaten, Acrylaten, Epoxyverbindungen, Carbonaten und/oder α,β-ungesättigten Verbindungen in Folgereaktionen weiter umsetzen. R steht für Wasserstoff, einen aliphatischen, cycloaliphatischen, araliphatischen und/oder aromatischen Rest mit bis zu 36 C-Atomen oder einen Polyoxyalkylen-Rest, m für 1 und Z stellt einen nicht basischen und/oder aromatischen Rest mit einer zahlenmittleren Molmasse kleiner 10000 g/mol dar und der eine oder mehrere der folgenden Bedeutungen hat:
A) ein C₁-C₅₀-Alkylrest, der linear, verzweigt, gesättigt oder ein bis mehrfach ungesättigt sein kann, ein C₄-C₃₆-Cycloalkylrest oder
B) ein C₆-C₃₆-Arylrest oder C₇-C₃₆-Aralkylrest oder
C) Rest einer Polyalkylenoxidverbindung oder
D) Rest eines gegebenenfalls polyether- und/oder polyesterhaltigen Polysiloxans, welcher gegebenenfalls funktionelle Gruppen aufweisen kann. Erfindungsgemäß gilt, dass m = 1 ist.

R kann Wasserstoff, ein C₁-C₃₆-Alkylrest sein, der linear, verzweigt, gesättigt oder ein bis mehrfach ungesättigt sein kann, ein C₄-C₃₆-Cycloalkyl-, ein C₆-C₃₆-Aryl- oder ein C₇-C₃₆-Aralkylrest sein. Bevorzugt steht R für Wasserstoff, einen C₁-C₂₂-Alkyl-, einen C₅-C₁₅-Cycloalkyl-, einen C₆-C₁₈-Aryl- oder einen C₇-C₂₀-Aralkylrest und ganz besonders bevorzugt für Wasserstoff, einen C₁-C₈-Alkyl-, einen C₆-C₁₂-Aryl- oder einen C₇-C₁₂-Aralkylrest.

Z kann ein C₁-C₅₀-Alkylrest, bevorzugt ein C₁-C₃₆-Alkylrest sein, der linear, verzweigt, gesättigt oder ein bis mehrfach ungesättigt sein kann, ein C₄-C₃₆-Cycloalkyl-, ein C₆-C₃₆-Aryl- oder ein C₇-C₃₆-Aralkylrest sein. Bevorzugt steht Z für einen C₁-C₂₂-Alkyl-, einen C₅-C₁₅-Cycloalkyl-, einen C₆-C₁₈-Aryl- oder einen C₇-C₂₀-Aralkylrest und ganz besonders bevorzugt für einen C₁-C₁₈-Alkyl-, einen C₆-C₁₂-Aryl- oder einen C₇-C₁₂-Aralkylrest.

Z steht auch für einen C₂-C₃₆-Alkylenrest-, der linear, verzweigt, gesättigt oder ein bis mehrfach ungesättigt sein kann, einen C₄-C₃₆-Cycloalkylen-, einen C₆-C₃₆-Arylen- oder einen C₇-C₃₆-Aralkylenrest. Bevorzugt steht Z für einen C₂-C₁₈-Alkylen-, einen C₁₂-C₁₈-Alkenylen-, einen C₅-C₁₅-Cycloalkylen-, einen C₆-C₁₈-Arylen- oder einen C₇-C₂₀-Aralkylenrest. Ganz besonders bevorzugt gilt, dass Z einen C₂-C₁₂-Alkylen-, einen C₆-C₁₂-Arylen- oder einen C₇-C₁₂-Aralkylenrest darstellt. Daneben kann Z einen Polytetrahydrofuran-, einen Polyolefin-, einen Polydimethylsiloxan- oder einen Polyoxyalkylenrest darstellen. Bevorzugt ist der Polyoxyalkylenrest aus Ethylenoxid- und/oder Propylenoxid- und/oder Butylenoxidgruppen, welche statistisch oder blockweise angeordnet sind, zusammengesetzt und weist ein zahlenmittleres Molekulargewicht von 148 bis 10000 g/mol, besonders bevorzugt von 148 bis 5000 g/mol auf.

Eine Gruppe von Verbindungen, die als Z-(NHR)ₘ mit m = 1 verwendet werden können, besteht aus Alkylaminen, wie z. B. Methylamin, Ethylamin, n-Propylamin, Isopropylamin, n-Butylamin, iso-Butylamin, Amylamin, n-Pentylamin, iso-Pentylamin, Hexylamin, 2-Ethylhexylamin, Octylamin, 6-Methyl-2-heptanamin, Neopentylamin, Decylamin, Tridecylamin, Octadecylamin, Oleylamin, Mischungen von C₈-C₂₂-Alkylaminen, wie sie von Akzo Nobel z. B. als Armeen^{®} C oder Armeen^{®} M angeboten werden, aber auch sekundären Alkylaminen, wie z. B. Dimethylamin, Diethylamin, Di-n-propylamin, Diisopropylamin, Dibutylamin, Diisobutylamin, Di-sec.-butylamin, Dipentylamin, Diisopentylamin, Dihexylamin, Di-2-ethylhexylamin, Dioctylamin, Ditridecylamin, Ditallowamin, N-Methylbutylamin, N-Ethylbutylamin, N-Ethylisopropylamin oder N-Ethyl-1,2-dimethylpropylamin. Cycloaliphatische Amine, wie z. B. Cyclobutylamin, Cyclopentylamin, Cyclohexylamin, N-Methylcyclohexylamin, N-Ethylcyclohexylamin oder Dicyclohexylamin, finden ebenso Verwendung wie araliphatische Monoamine, wie z. B. Benzylamin, 2-Phenylethylamin, 4-Methoxybenzylamin, 4-Methoxyphenylethylamin, 1-Methyl-3-phenylpropylamin, 2-(3,4-Dimethoxyphenyl)ethylamin, N-Methylbenzylamin oder Dibenzylamin. Die Verwendung von Benzylamin und Dibenzylamin ist bevorzugt. Alkoxyalkylamine, wie z. B. 2-Methoxyethylamin, 2-Ethoxyethylamin, 3-Methoxypropylamin, 3-Ethoxypropylamin, 3-(2-Ethylhexoxy)propylamin, 3-(2-Methoxyethoxy)propylamin und Di(2-Methoxyethyl)amin, können ebenfalls verwendet werden. Polyoxyalkylenmonoamine, welche Ethylenoxid- und/oder Propylenoxid- und/oder Butylenoxidgruppen enthalten, statistisch oder blockweise angeordnet, gegebenenfalls mit Styroloxid modifiziert sind und ein mittleres Molekulargewicht von 300 bis 4.000 g/mol aufweisen, können ebenfalls eingesetzt werden. Bekannt sind solche Verbindungen z. B. unter den Handelsnamen Jeffamine^{®} M 600, M 1000, M 2005 und M 2070 von Huntsman.

Eine weitere Gruppe von Verbindungen, die als Z-(NHR)ₘ mit. m = 1 verwendet werden können, besteht aus Aminen mit einer oder mehreren Carboxyfunktionen. Beispiele für solche Aminocarbonsäuren sind z. B. Aminoessigsäure, 6-Aminohexansäure, 7-Aminoheptansäure, 11-Aminoundecansäure, 12-Aminododecansäure, Anthranilsäure, 3-Aminophenylessigsäure, 4-Aminophenylessigsäure, Aminonaphthoecarbonsäure, 4-Amino-2-Hydroxybenzoesäure, bevorzugt m-Aminobenzoesäure und p-Aminobenzoesäure. Diese Verbindungen können auch als Mischungen eingesetzt werden.

Darüber hinaus können Verbindungen, die als Z-(NHR)ₘ mit m = 1 Verwendung finden, aus Aminen mit einer oder mehreren Sulfonsäuregruppen bestehen. Beispiele für solche Verbindungen sind z. B. 2-Aminobenzolsulfonsäure, 3-Aminobenzolsulfonsäure, 4-Aminobenzolsulfonsäure, Aminomethansulfonsäure, 2-Aminoethansulfonsäure, 3-Aminopropansulfonsäure, Naphthylaminsulfonsäure und Aminonaphthoesulfonsäure. Diese Verbindungen können auch als Mischungen eingesetzt werden.

Aminfunktionelle Phosphonsäuren wie z. B. 4-Aminobenzolphosphonsäure und 3-Aminopropan-1-phosphonsäure können ebenfalls als Verbindungen Z-(NHR)ₘ mit m = 1 verwendet werden.

Ein weiterer Vertreter von Verbindungen, die als Z-(NHR)ₘ mit m = 1 Verwendung finden, sind Aminohydroxyverbindungen wie z. B. 2-Aminoethanol, 3-Amino-1-propanol, 1-Amino-2-propanol, 6-Amino-1-hexanol, 2-(2-Aminoethoxy)ethanol, N-Methylethanolamin, N-Ethylethanolamin, N-Butylethanolamin, Diethanolamin, 3-(2-Hydroxyethylamino)-1 -propanol, 1 -Amino-2,3-propandiol, 1-(Methylamino)-2,3-propandiol und Diisopropanolamin, sowie deren alkoxylierte Verbindungen mit endständiger OH-Gruppe. Diese Verbindungen können auch als Mischungen eingesetzt werden.

Diese OH-Gruppen enthaltende Verbindungen können ohne weitere Umsetzung als Dispergiermittel eingesetzt werden, es kann aber auch sinnvoll sein, insbesondere zur Dispergierung von bestimmten Pigmenten, deren Oberfläche basischen Charakter hat, die OH-Gruppen in einer solchen Weise umzusetzen, dass ein Produkt mit sauren funktionellen Gruppierungen entsteht. Eine solche Umwandlung lässt sich erreichen durch Umsetzung der OH-Gruppen mit einer solchen Menge an Di- oder Polycarbonsäuren oder deren Anhydriden, dass Vernetzungsreaktionen weitgehend vermieden werden. Vernetzungsreaktionen bei der Addition von Polycarbonsäuren oder deren Anhydriden an OH-funktionelle Verbindungen lassen sich, wie dem Fachmann bekannt ist, dadurch weitgehend vermeiden, dass auf jede umzusetzende OH-Gruppe mindestens 0,8 Moleküle, bevorzugt 1 Molekül Polycarbonsäure oder Polycarbonsäureanhydrid eingesetzt werden. Ein geringfügiger Überschuß Polycarbonsäure oder Polycarbonsäureanhydrid zur Vermeidung von Vernetzungsreaktionen kann sinnvoll sein. Im allgemeinen reicht ein Überschuß von etwa 25, vorzugsweise 10 mol% aus.

Als Reaktionspartner für eine derartige Veresterungsreaktion können sämtliche nach dem Stand der Technik für Veresterungsreaktionen brauchbaren Polycarbonsäuren oder Polycarbonsäureanhydriden eingesetzt werden, wie z. B. Bernsteinsäure, Maleinsäure, Fumarsäure, Acetylendicarbonsäure, Glutarsäure, Adipinsäure, 1,10-Dodecandicarbonsäure, Terephthalsäure, Diglykolsäure, Benzol-1-,2,4-tricarbonsäure, Benzol-1,2,3,4-tetracarbonsäure, Acetanhydrid, Bernsteinsäureanhydrid, Maleisäureanhydrid, Phthalsäureanhydrid, Tetrahydrophthalsäureanhydrid, Alkyltetrahydrophthalsäureanhydrid, Hexahydrophthalsäureanhydrid, Alkylhexahydrophthalsäureanhydrid, Trimellithsäureanhydrid, 1,8-Naphthalsäureanhydrid, Alkenyl- und/oder Alkyl-Bernsteinsäureanhydrid mit bevorzugt 1 bis 20 Kohlenstoffatomen in den Alkenyl- oder Alkylketten.

Wie dem Fachmann bekannt, verläuft die Veresterungsreaktion eines Alkohols im allgemeinen mit einem Carbonsäureanhydrid erheblich leichter als mit der entsprechenden Carbonsäure. Daher werden bei der molaren Umsetzung von Alkoholen mit den Anhydriden von Polycarbonsäuren bevorzugt die Anhydridgruppen in Reaktion treten, während die vorhandenen oder im Verlauf der Halbesterbildung entstehenden freien Carboxylgruppen weitgehend erhalten bleiben. Dies erlaubt eine selektive Reaktionsführung unter weitgehender Vermeidung von Vernetzungsreaktionen. Allerdings nimmt die Selektivität der Anhydrid-Reaktion mit steigender Reaktionstemperatur ab. Zweckmäßig sollte daher zur Erzielung eines selektiven Reaktionsverlaufs die Anhydrid-Addition möglichst bei Temperaturen unterhalb 150°C durchgeführt werden. Aus den vorstehend genannten Gründen ist es zweckmäßig, die Polycarbonsäuren nach Möglichkeit in Form ihrer Anhydride einzusetzen.

Diese endständige OH-Gruppe lässt sich darüber hinaus ganz oder teilweise mit esterbildenden Phosphorverbindungen zu Phosphorsäureestern weiter umsetzen.
Die Umsetzung mit diesen Phosphorylierungsagentien kann nach an sich bekannten Methoden, wie z. B. in Houben-Weyl, Methoden der Organischen Chemie, 4. Auflage, Band XII/2, Seite 143-210 (1963) und der US-A-4 183 766 beschrieben, vorgenommen werden. Unter einer esterbildenden Phosphorverbindung wird eine Phosphorverbindung verstanden, die durch Umsetzung mit einer Hydroxyverbindung Phosphorsäureester bilden kann. Als esterbildende Phosphorverbindungen können zum Beispiel Phosphoroxichlorid, Phosphorpentoxid, Polyphosphorsäure und Acetylphosphat eingesetzt werden. Weitere Beispiele sind in der DE-A-27 26 854 beschrieben. Bevorzugt sind Phosphorpentoxid und Polyphosphorsäure.

Je nach Art des eingesetzten Phosphorylierungsreagenzes und nach der stöchiometrischen Einsatzmenge von Phosphorylierungsreagenz zu phosphorylierender Komponente bilden sich Mono- oder Diester oder auch Gemische aus beiden Spezies. Mit Polyphosphorsäure entstehen überwiegend Monoester und mit Phosphorpentoxid Mono/Diester-Gemische. Die Monoester sind bevorzugt. Es ist auch möglich, dass bei der Phosphorylierungsreaktion ein Gemisch verschiedener zu phosphorylierender Komponenten eingesetzt wird.

Wie dem Fachmann bekannt sind, können sich neben den Phosphorsäure-Monoestern wechselnde Mengen an Pyro- und Polyphosphorsäureestern als Primärprodukte bilden, wenn insbesondere höher kondensierte Polyphosphorsäuren im Überschuss angewandt werden (vgl. Houben-Weyl, Band XII/2, S. 147). Diese können mit Wasser, das u. a. aufgrund der Hygroskopie pulverförmiger Feststoffe in diesen vorliegt, hydrolysieren.

Die Reaktion der oben erwähnten esterbildenden Phosphorverbindungen mit den Hydroxyverbindungen erfolgt vorzugsweise ohne Lösungsmittel bei Temperaturen bis etwa 120°C. Die Reaktion kann aber auch in Gegenwart von geeigneten inerten Lösungsmitteln durchgeführt werden, wie zum Beispiel in der EP-A-193 019 beschrieben. Die Einsatzmenge an der Phosphorverbindung hängt vom gewünschten Phosphorylierungsgrad ab.

Die so erhaltenen Phosphorsäureester und die weiter oben beschriebenen sulfon- und phosphonsauren Addukte und sauren Carboxylverbindungen sind durch ihre verbleibenden aciden Gruppen zur Salzbildung befähigt. Sie können im Sinne der Erfindung auch in Form von derartigen Salzen eingesetzt werden. Diese Salze werden aus dem erhaltenen Reaktionsprodukt durch unvollständige oder vollständige Neutralisation mit organischen oder anorganischen Basen erhalten. Beispiele für solche organischen Basen sind primäre, sekundäre und tertiäre Amine sowie Aminoalkohole, wie Mono-, Di- oder Tri-(C₁-C₆-alkyl)amine, z. B. Trimethylamin, Triethylamin, Diethylamin, Dipropylamin, Dibutylamin oder Mono-, Di- oder Tri-(C₁-C₄-alkanol)amine, z. B. Ethanolamin, Diethanolamin, Triethanolamin, Dimethylethanolamin, Diethylethanolamin, Dibutylethanolamin und 2-Amino-2-methyl-1-propanol.

Beispiele für anorganische Basen sind Ammoniak, NaOH, KOH, LiOH, Magnesiumhydroxid und Calciumhydroxid. Durch die Wahl der verwendeten Base und den Neutralisationsgrad und lässt sich die Wasserlöslichkeit des erfindungsgemäßen Verbindungen einstellen.

Ein weiterer Vertreter von Verbindungen, die als Z-(NHR)ₘ mit m = 1 Verwendung finden, sind Aminoalkoxysilane wie z. B. (3-Aminopropyl)trimethoxysilan, (3-Aminopropyl)triethoxysilan, p-Aminophenyltriethoxysilan, 4-Aminobutyl-triethoxysilan, 4-Aminobutyl-dimethylmethoxysilan, 3-Aminopropyl-methyldiethoxysilan, (N-Cyclohexyl-aminomethyl)methyldiethoxysilan, (N-Cyclohexylaminomethyl)triethoxysilan, (N-Phenyl-aminomethyl)methyldimethoxysilan und (N-Phenylaminomethyl)trimethoxysilan und Bis[3-(Triethoxysilyl)propyl]amin. Diese Verbindungen können auch als Mischungen eingesetzt werden. Die endständigen Alkoxygruppen lassen sich in Wasser oder wässrigen Medien hydrolysieren, so dass Hydroxyfunktionalitäten entstehen.

Zur Herstellung der erfindungsgemäßen Additionsverbindungen können auch Gemische von verschiedenen Ausgangsstoffen wie Gemische von uretdionhaltigen Polyisocyanaten, und/oder Verbindungen nach Formel (I) und/oder (II) eingesetzt werden.

Die Herstellung der erfindungsgemäßen Additionsverbindungen kann, analog zum Stand der Technik, je nach Viskosität, in Substanz oder in Gegenwart von geeigneten Lösungsmitteln, Lösungsmittelgemischen oder anderen geeigneten Trägermedien durchgeführt werden. Geeignet sind alle Lösungsmittel oder Trägermedien, die nicht reaktiv sind oder deren Reaktivität gegenüber den Reaktionspartnern zu vernachlässigen ist und in denen die Reaktanden und die Reaktionsprodukte zumindest teilweise löslich sind, z. B. Kohlenwasserstoffe wie Toluol, Xylol, aliphatische und/oder cyloaliphatische Benzinfraktionen, chlorierte Kohlenwasserstoffe wie Chloroform, Trichlorethan, cyclische und acyclische Ether wie Dioxan, Tetrahydrofuran, Polyalkylenglykoldialkylether, Ester wie Ethylacetat, Butylacetat, Butyrolacton, Phthalate oder andere Weichmacher, Di- oder Polycarbonsäureester, als "Dibasic Ester" bezeichnete Dialkylester von C₂- bis C₄-Dicarbonsäuren, Alkylglykolester wie Ethylglykolacetat, Methoxypropylacetat, Ketone wie Methylisobutylketon, Cyclohexanon, Aceton, Säureamide wie Dimethylformamid, N-Methylpyrrolidon usw. Zweckmäßig wählt man das oder die Lösemittel bzw. Trägermedien bereits unter Berücksichtigung des geplanten Einsatzgebietes aus. Zum Beispiel werden für erfindungsgemäße Additionsverbindungen für den Einsatz in wasserverdünnbaren Lacksystemen oder zur Belegung von Pigmenten in wäßriger Suspension nach der Pigmentsynthese zweckmäßig Lösemittel eingesetzt, die ganz oder teilweise wasserverdünnbar sind. Sollen die Produkte zum Beispiel dort eingesetzt werden, wo die Anwesenheit von VOC (volatile organic compounds) nicht erwünscht ist, sollte die Formulierung möglichst lösemittelfrei sein oder in entsprechend hochsiedenden Trägermedien erfolgen.

Je nach Anwendungsgebiet können die zur Synthese verwendeten Lösungsmittel im Reaktionsgemisch verbleiben oder werden ganz oder teilweise entfernt und gegebenenfalls durch andere Lösungsmittel oder Trägermedien ersetzt. Die erfindungsgemäßen Additionsverbindungen können je nach Verträglichkeit auch mit Harzen, Harzlösungen, Reaktivverdünnern, Bindemitteln oder mit anderen nach dem Stand der Technik bekannten Additiven kombiniert werden, wie zum Beispiel anderen Netz- und Dispergiermitteln, Antiabsetzmitteln, oberflächenaktiven Additiven wie z. B. Silikonen usw. So läßt sich z. B. die Bildung von Ausschwimmerscheinungen wie Benard-Zellen durch Kombination der erfindungsgemäßen Additionsverbindungen mit oberflächenaktiven Silikonverbindungen unterdrücken.

Das Lösungsmittel kann zum Beispiel durch Abdestillieren, gegebenenfalls bei reduziertem Druck und/oder azeotrop unter Zusatz von Wasser, ganz oder teilweise entfernt werden. Die Wirksubstanz kann aber auch durch Ausfällen durch Zusatz von Nichtlösern wie aliphatischen Kohlenwasserstoffen, beispielsweise Hexan, anschließendem Abtrennen durch Filtration und gegebenenfalls Trocknen isoliert werden. Die nach einer dieser Methoden erhaltene Wirksubstanz kann dann in einem für das jeweilige Anwendungsgebiet geeigneten Lösungsmittel angelöst werden oder gegebenenfalls in reiner Form z. B. bei Pulverlacken, eingesetzt werden. Gegebenenfalls kann das Lösungsmittel, in dem das Additionsprodukt gelöst ist, nach Zusatz von geeigneten höher siedenden Lösungsmitteln, gegebenenfalls unter vermindertem Druck und/oder azeotrop unter Zusatz von Wasser, abdestilliert werden Auf diese Weise kann das Additionsprodukt in ein für das jeweilige Anwendungsgebiet geeignetes Trägermedium überführt werden.

Die Umsetzungen können in Gegenwart von üblichen Katalysatoren durchgeführt werden, z. B. organischen Zinnverbindungen, wie Dibutylzinndilaurat, anderen organometallischen Verbindungen wie Eisenacetylacetonat, tertiären Aminen wie Triethylendiamin, Enzymen oder dergleichen.

Durch Variation der Substituenten der Formel (I), deren Art, Mengenverhältnissen und/oder Molekulargewichten lassen sich die Eigenschaften der erfindungsgemäßen Additionsverbindungen an die unterschiedlichen Anwendungsgebiete anpassen. So können zum Beispiel die Löslichkeit und die Verträglichkeit auf die unterschiedlichsten Lösemittel, Trägermedien, Bindemittel, Harze, Feststoffe und gegebenenfalls weitere polymere Verbindungen abgestimmt werden, welche in Überzugs- und Formmassen vorliegen, in denen die Additionsverbindungen gemäß der Erfindung zur Anwendung kommen.

Für den Einsatz in hochpolaren Systemen wie z. B. Wasserlacken und Elektrotauchlackierungen sollten die Reste Y einen ausreichend hohen Anteil an polaren Gruppen, wie z. B. Polyethylenoxiden, enthalten, um eine für den jeweiligen Einsatzbereich ausreichende Wasserlöslichkeit zu erreichen. Dieser Anteil an hydrophilen Gruppen sollte aber auch nicht zu hoch sein, wenn es dadurch in bestimmten Anwendungen zu einer nicht gewünschten Erhöhung der Wasserempfindlichkeit kommt.

Beim Einsatz in unpolaren Systemen wie Langölalkydlacken, PVC-Plastisolen oder Polyolefinen sollte ein entsprechender Anteil an unpolaren Gruppen vorliegen und beim Einsatz in Systemen, bei denen eine breite Verträglichkeit wichtig ist, wie z. B. Pigmentkonzentraten, ist eine ausgewogene Kombination von polaren und unpolaren Gruppen von Vorteil.

Für die Dispergierung in Silikonölen wie zum Beispiel Dekamethylcyclopentasiloxan, zum Beispiel für kosmetische Zubereitungen, eignen sich besonders polydimethylsiloxanhaltige Additionsverbindungen. Wenn die Additionsverbindungen z. B. in einem Polyurethanharz oder in einem Lack, dessen Bindemittel ein Polyurethan ist, eingesetzt werden, ist es zweckmäßig, solche erfindungsgemäßen Additionsverbindungen einzusetzen, die in ihrem Molekül aufgrund der in den Ausgangsverbindungen der Formel (I) enthaltenen Gruppen auch Urethangruppen oder ähnliche Gruppen enthalten, die - wie dem Fachmann bekannt ist - mit Polyurethanen verträglich sind. Das gleiche gilt sinngemäß für z. B. Polyacrylate, Polyester, Alkydharze usw.

Sinngemäß gilt dies auch für die Substituenten der Formel (II), die von besonderem Einfluß auf die Affinität der erfindungsgemäßen Additionsverbindungen zu den verwendeten Feststoffen sind, die dispergiert werden sollen. Biuretaddukte mit sauren funktionellen Gruppen wie z. B. COOH, SO₃H und PO₃H₂ oder Phosphorsäureester enthaltende Additionsverbindungen können zur Stabilisierung von Feststoffen, welche basischen Charakter besitzen, insbesondere anorganische Pigmente und Füllstoffe wie z. B. TiO₂, Eisenoxid, CaCO₃ oder Aluminiumhydroxid verwendet werden. Für die Stabilisierung organischer Pigmente wie z. B. Hostapermblau BT 729D in wässrigen Systemen eignen sich besonders Biuretverbindungen mit nicht-ionischen Gruppen. Alkoxysilanhaltige Addukte eignen sich insbesondere für hydroxylgruppenhaltige Oberflächen wie Quarz oder Glasfasern, mit denen sie unter Reaktion eine besonders feste Bindung eingehen und daher auch Verbesserungen bei Haftung und mechanischen Eigenschaften bewirken können, insbesondere in Kombination mit mitvernetzbaren Resten Y mit zum Beispiel Acrylgruppen.

Erfindungsgemäße Additionsverbindungen mit oberflächenaktiven- Substituenten, können die Oberflächenspannung der mit ihnen hergestellten Substrate verändern. Sind etwa sehr unpolare Gruppen wie zum Beispiel langkettige Alkylgruppen mit mehr als 12 C-Atomen, polydimethylsiloxanhaltige und/oder perfluoralkylhaltige Gruppen enthalten, eignen sich die Produkte, um die Oberflächenspannung von flüssigen organischen oder wässrigen oder von festen Systemen zu reduzieren, und die damit zusammenhängenden Eigenschaften wie zum Beispiel Benetzungseigenschaften, Anschmutzbarkeit, Bedruckbarkeit, Verlauf und Schaumverhalten zu beeinflussen. In Systemen, die eine Reaktivität mit Doppelbindungen aufweisen, z. B. strahlenhärtende Beschichtungen, wie UV- oder elektronenstrahlhärtende Lacke und Druckfarben oder ungesättigte Polyestersysteme, läßt sich durch Verwendung von erfindungsgemäßen Additionsverbindungen mit ungesättigten Gruppen eine Mitvernetzung erreichen, die zu Verbesserungen von Haftung, Einbindung der Feststoffe, mechanischen Eigenschaften und Migrationsverhalten führt. In Anwendungen, bei denen die Anwesenheit von Doppelbindungen, zum Beispiel durch hohe Verarbeitungstemperaturen, zu unerwünschten Nachteilen wie Verfärbungen führt, werden zweckmäßig erfindungsgemäße Additionsverbindungen mit möglichst wenig und bevorzugt gar keinen ungesättigten Gruppen eingesetzt.

Das mittlere Molekulargewicht der erfindungsgemäßen Additionsverbindungen liegt mindestens bei zweckmäßig 500 g/mol, bevorzugt 800 g/mol, besonders bevorzugt 1200 g/mol und ganz besonders bevorzugt 2000 g/mol.

Gegenstand der Erfindung ist auch ein Verfahren zur Herstellung von Additionsverbindungen, bei welchem
(A)
   (a) ein oder mehrere uretdiongruppenhaltige Polyisocyanate mit
   (b) einer oder mehreren Verbindungen der Formel (I)

      Y-(XH)ₙ (I)

      wobei
      XH für eine gegenüber Isocyanaten reaktive Gruppe steht und
      Y für eine nicht gegenüber Isocyanaten reaktive, monomere oder polymere organische Gruppe steht, die eine oder mehrere aliphatische, cycloaliphatische, araliphatischeund/oderaromatische Gruppen umfaßt,
      wobei Y eine zahlenmittlere Molmasse kleiner 20000 g/mol besitzt und
      n für 1,2 oder 3 steht und
      wobei für mindestens 50 Mol-% der Verbindungen der Formel (I) gilt, dass n = 1 ist,
      unter der Vorgabe umgesetzt werden, dass mindestens 50% der freien Isocyanatgruppen der Komponente (a) mit den Verbindungen der Formel (I) zu einem Uretdiongruppen enthaltendem Zwischenprodukt umgesetzt werden,
(B) das Zwischenprodukt mit
   c) einer oder mehreren Verbindungen der allgemeinen Formel (II)

      Z-(NHR)ₘ (II)

      zur Reaktion gebracht wird,
      worin
      R für Wasserstoff, einen aliphatischen, cycloaliphatischen, araliphatischen und/oder aromatischen Rest mit bis zu 36 C-Atomen oder einen Polyoxyalkylen-Rest steht,
      m für 1 steht und
      Z einen nicht-basischen Rest mit einer zahlenmittleren Molmasse kleiner 10000 g/mol darstellt, und eine oder mehrere der folgenden Bedeutungen hat:
         A) ein C₁-C₅₀-Alkylrest, der linear, verzweigt, gesättigt oder ein bis mehrfach ungesättigt sein kann, ein C₄-C₃₆-Cycloalkylrest oder
         B) ein C₆-C₃₆-Arylrest oder C₇-C₃₆-Aralkylrest oder
         C) Rest einer Polyalkylenoxidverbindung oder
         D) Rest eines gegebenenfalls polyether- und/oder polyesterhaltigen Polysiloxans, wobei Z gegebenenfalls folgende funktionelle Gruppen aufweisen kann:
            - -OH
            - -COOH
            - -SO₃H
            - -PO₃H₂
            - -Si(OR)₃ und -SiR(OR)₂ und
(C) optional im Reaktionsprodukt vorhandene Hydroxylgruppen mit Polyphosphorsäure oder P₂O₅ oder mit Polycarbonsäuren mit mindestens zwei Carboxylgruppen oder deren Anhydriden in einer solchen Menge umgesetzt werden, dass auf jede umzusetzende OH-Gruppe mindestens 0,8 Moleküle Polycarbonsäure oder Polycarbonsäureanhydrid eingesetzt wird und
(D) optional die Additionsverbindungen mit organischen oder anorganischen Basen umgesetzt werden
unter der Maßgabe, daß alle gegebenenfalls noch vorhandenen freien NCO-Gruppen und mindestens 20% der ursprünglich eingesetzten Uretdiongruppen mit Z-(NHR)ₘ zur Reaktion gebracht werden.

Weiterer Gegenstand der Erfindung ist die Verwendung der vorstehend beschriebenen erfindungsgemäßen Additionsverbindungen als Dispergiermittel und als Dispersionsstabilisatoren.

Gegenstand der Erfindung sind auch in flüssige Systeme einzuarbeitende pulver- oder faserförmige Feststoffe, die mit diesen Additionsverbindungen als Dispergiermittel und als Dispersionsstabilisatoren beschichtet sind.

Der Einsatz der erfindungsgemäßen Additionsverbindungen kann gemäß dem Stand der Technik für bekannte Dispergiermittel erfolgen, wobei anstelle der nach dem Stand der Technik bekannten Dispergiermittel diejenigen gemäß der Erfindung eingesetzt werden. So können diese z. B. bei der Herstellung oder Verarbeitung von Lacken, Druckfarben, Tinten für Tintenstrahldruck, Papierstrich, Leder- und Textilfarben, Pasten, Pigmentkonzentraten, Keramiken, kosmetischen Zubereitungen eingesetzt werden, insbesondere wenn diese Feststoffe wie Pigmente und/oder Füllstoffe enthalten. Auch bei der Herstellung oder Verarbeitung von Gieß- und/oder Formmassen auf Basis von synthetischen, halbsynthetischen oder natürlichen makromolekularen Stoffen, wie zum Beispiel Polyvinylchlorid, gesättigten oder ungesättigten Polyester, Polyurethan, Polystyrol, Polyacrylat, Polyamid, Epoxidharzen, Polyolefinen wie Polyethylen oder Polypropylen können sie eingesetzt werden. Beispielsweise lassen sich die Additionsverbindungen zur Herstellung von Gießmassen, PVC-Plastisolen, Gelcoats, Polymerbeton, Leiterplatten, Industrielacken, Holz- und Möbellacken, Fahrzeuglacken, Schiffsfarben, Korrosionsschutzfarben, Can- und Coil-Coatings, Maler- und Bautenlacken, wobei Bindemittel und/oder Lösemittel, Pigmente und gegebenenfalls Füllstoffe, die Additionsverbindung und übliche Hilfsstoffe vermischt werden, verwenden. Beispiele für übliche Bindemittel sind Harze auf Basis von Polyurethan, Cellulosenitrat, Celluloseacetobutyrat, Alkyd, Melamin, Polyester, Chlorkautschuk, Epoxid und Acrylat. Beispiele für Beschichtungen auf Wasserbasis sind kathodische oder anodische Elektrotauchlackierungen zum Beispiel für Automobilkarossen. Weitere Beispiele sind Putze, Silikatfarben, Dispersionsfarben, Wasserlacke auf Basis von wasserverdünnbaren Alkyden, Alkydemulsionen, Hybridsystemen, 2-Komponenten-Systemen, Polyurethan- und Acrylat-Dispersionen.

Die erfindungsgemäßen Additionsverbindungen eignen sich insbesondere auch zur Herstellung von Feststoffkonzentraten, wie zum Beispiel Pigmentkonzentrate. Dazu werden die erfindungsgemäßen Verbindungen in einem Trägermedium wie organischen Lösemitteln, Weichmachern und/oder Wasser vorgelegt, und die zu dispergierenden Feststoffe werden unter Rühren zugegeben. Zusätzlich können diese Konzentrate Bindemittel und/oder andere Hilfsstoffe enthalten. Mit den erfindungsgemäßen Additionsverbindungen ist aber insbesondere möglich, stabile bindemittelfreie Pigmentkonzentrate herzustellen. Ebenso ist es möglich, mit den erfindungsgemäßen Verbindungen fließfähige Feststoffkonzentrate aus Pigmentpresskuchen herzustellen. Hierbei wird dem Presskuchen, der noch organische Lösemittel, Weichmacher und/oder Wasser enthalten kann, die erfindungsgemäße Verbindung zugemischt und die so erhaltene Mischung dispergiert. Die auf verschiedenen Wegen hergestellten Feststoffkonzentrate können dann in unterschiedliche Substrate wie z. B. Alkydharze, Polyesterharze, Acrylatharze, Polyurethanharze oder Epoxidharze eingearbeitet werden. Pigmente können aber auch lösemittelfrei direkt in den erfindungsgemäßen Additionsverbindungen dispergiert werden und eignen sich dann besonders zur Pigmentierung von thermoplastischen und duroplastischen Kunststoffformulierungen.
Die erfindungsgemäßen Additionsverbindungen können vorteilhaft auch bei der Herstellung von Farbfiltern für Flüssigkristallanzeigen, -bildschirme, Farbauflösungsgeräte, Sensoren, Plasmabildschirme, Anzeigen auf Basis der SED (Surface conduction Electron emitter Display) und für MLCC (Multi Layer Ceramic Compounds) verwendet werden. Die MLCC-Technologie wird bei der Herstellung von Mikrochips und Leiterplatten verwendet.

Die erfindungsgemäßen Additionsverbindungen können auch zur Herstellung kosmetischer Zubereitungen wie zum Beispiel Make-up, Puder, Lippenstifte, Haarfärbemittel, Cremes, Nagellacke und Sonnenschutzpräparate verwendet werden. Diese können in den üblichen Formen, wie beispielsweise als W/O- oder O/W-Emulsionen, Lösungen, Gele, Cremes, Lotionen oder Sprays, vorliegen. Die erfindungsgemäßen Additionsverbindungen können vorteilhaft in zur Herstellung dieser Zubereitungen verwendeten Dispersionen eingesetzt werden. Diese können die für diese Zwecke in der Kosmetik üblichen Trägermedien, wie zum Beispiel Wasser, Ricinusöle oder Silikonöle und Feststoffe, wie zum Beispiel organische und anorganische Pigmente wie Titandioxid oder Eisenoxid enthalten.

Gegenstand der Erfindung ist letztlich auch die Verwendung eines derartigen Dispergiermittels zur Herstellung eines pigmentierten Überzuges auf einem Substrat, wobei der Pigmentlack auf das Substrat aufgebracht wird und wobei der auf das Substrat aufgebrachte Pigmentlack eingebrannt oder ausgehärtet bzw. vernetzt wird.

Die Additionsverbindungen können alleine oder zusammen mit nach dem Stand der Technik üblichen Bindemitteln eingesetzt werden. Beim Einsatz in Polyolefinen kann es z. B. vorteilhaft sein, entsprechende niedermolekulare Polyolefine als Trägermaterialien zusammen mit der Additionsverbindung, einzusetzen.

Eine erfindungsgemäße Verwendung der Additionsverbindungen besteht auch in der Herstellung dispergierbarer pulverpartikel- und/oder faserpartikelförmiger Feststoffe, insbesondere von dispergierbaren Pigmenten oder Kunststofffüllstoffen, wobei die Partikel mit der Additionsverbindung beschichtet sind. Derartige Beschichtungen von organischen wie auch anorganischen Feststoffen werden in bekannter Weise ausgeführt, wie sie z. B. in EP-A-0 270 126 beschrieben werden. Hierbei kann das Lösungs- oder Emulsionsmittel entweder entfernt werden oder im Gemisch unter Bildung von Pasten verbleiben. Diese Pasten sind übliche Handelsprodukte und können zusätzlich Bindemittelanteile sowie weitere Hilfs- und Zusatzstoffe enthalten. Speziell bei Pigmenten kann die Beschichtung der Pigmentoberfläche während oder nach der Synthese der Pigmente erfolgen, z. B. durch Zusatz der erfindungsgemäßen Additionsprodukte zur Pigmentsuspension oder während oder nach dem Pigmentfinish. Die auf diese Weise vorbehandelten Pigmente zeichnen sich durch leichtere Einarbeitbarkeit , sowie durch verbessertes Viskositäts-, Flockulations- und Glanzverhalten und durch höhere Farbstärke gegenüber nicht behandelten Pigmenten aus.

Neben der oben beschriebenen Anwendung als Dispergiermittel und/oder Beschichtungsmittel für pulver- und faserförmige Feststoffe können die erfindungsgemäßen Additionsverbindungen auch als Viskositätsreduzierer und Kompatibilisatoren in Kunstharzen oder zur Verbesserung der Verträglichkeit von Mischungen unverträglicher Komponenten wie zum Beispiel Polymermischungen eingesetzt werden. Beispiel für solche Kunstharze sind die sogenannten "sheet molding compounds" (SMC) und "bulk molding compounds" (BMC), die aus stark füllstoff- und faserhaltigen ungesättigten Polyesterharzen bestehen. Ihre Herstellung und Verarbeitung ist beispielhaft in DE-A-36 43 007 beschrieben. Ein Problem bei SMC-und BMC-Kunstharzmischungen besteht darin, dass oftmals Polystyrol (PS) der Formulierung zugesetzt wird, um die Schrumpfung während des Verarbeitungsprozesses zu reduzieren. PS ist nicht verträglich mit den verwendeten ungesättigten Polyesterharzen und es kommt zur Separation der Komponenten. Bei Verwendung von PS-gefüllten SMC- oder BMC-Mischungen können die erfindungsgemäßen Additive aufgrund ihrer guten Dispergierqualitäten eine Kompatibilisierung zwischen PS und ungesättigtem Polyesterharz herbeiführen, wodurch sich die Lagerstabilität und Verarbeitungssicherheit solcher Mischungen erhöht.

Ein weiteres Beispiel sind unverträgliche Polyol-Mischungen, Poly-Isocyanat-Mischungen oder Polyol-Treibmittelmischungen die zur Polyurethan-Herstellung verwendet werden. Durch die erfindungsgemäßen Additionsverbindungen können in vielen Fällen die aus dieser Unverträglichkeit resultierenden Separationsprobleme ganz oder teilweise vermieden werden.

Je nach Einsatzgebiet werden die erfindungsgemäßen Additionsverbindungen typischerweise in Mengen von 0,01 bis 10% bezogen auf die Gesamtmenge zugesetzt. Bezogen auf den zu dispergierenden Feststoff, werden sie in einer Menge von bevorzugt 0,5 bis 100 Gew.% eingesetzt. Werden schwierig zu dispergierende Feststoffe verwendet, kann die Menge an eingesetzter erfindungsgemäßer Additionsverbindung durchaus höher sein. Die Menge an Dispergiermittel ist im allgemeinen abhängig von der zu belegenden Oberfläche des zu dispergierenden Stoffes. Wird z. B. Titandioxid als Pigment verwendet, ist die Menge an Dispergiermittel geringer als im Fall von z. B. Ruß. Allgemein lässt sich sagen, dass zur Dispergierung anorganischer Pigmente weniger Dispergiermittel notwendig ist als für organische Pigmente, da letztere über eine höhere spezifische Oberfläche verfügen und von daher eine größere Menge an Dispergiermittel nötig ist. Typische Dosierungen für anorganische Pigmente liegen bei 1-10%, für organische Pigmente bei 10-30% (jeweils Wirksubstanz Additionsverbindung bezogen auf Pigment). Bei sehr feinteiligen Pigmenten (z: B. einigen Rußen) sind auch Zugabemengen von 30-80% oder mehr nötig. Als Kriterium für eine ausreichende Pigmentstabilisierung können beispielsweise Farbstärke, Glanz und Transparenz der Pigmentanreibung oder der Grad des Ausschwimmens (Rub-out Test) bei einer Weißabmischung herangezogen werden. Die Dispergierung der Feststoffe kann als Einzelanreibung erfolgen oder auch als Gemischtanreibung mit mehreren Pigmenten gleichzeitig, wobei die besten Ergebnisse in der Regel bei Einzelanreibungen zu erreichen sind. Bei der Verwendung von Mischungen verschiedener Feststoffe kann es durch gegensätzliche Ladungen auf den Feststoffoberflächen verstärkt zu Agglomerationen in der flüssigen Phase kommen. In diesen Fällen lässt sich bei Einsatz der erfindungsgemäßen Additionsverbindungen häufig eine gleichnamige, in der Regel positive Ladung aller Teilchen erreichen und damit Instabilitäten durch Ladungsunterschiede vermeiden. Ihre optimale Wirkung erzielen die Dispergiermittel bei Zugabe zum Mahlgut, insbesondere, wenn zunächst der zu dispergierende Feststoff nur mit dem Additiv und gegebenenfalls Lösemitteln gemischt wird ("Premix"), da dann das Additiv bevorzugt auf die Feststoffoberfläche adsorbieren kann, ohne in Wettbewerb mit den Bindemittel-Polymeren treten zu müssen. In der Praxis ist diese Vorgehensweise aber nur in Ausnahmefällen nötig. Bei Bedarf können die Additionsverbindungen auch nachträglich eingesetzt werden (als sogenannte "Post-Additive"), zum Beispiel, um in einem fertig aufgelackten Ansatz Ausschwimm- oder Flockulationsprobleme zu lösen. In der Regel sind in diesem Fall aber erhöhte Additiv-Dosierungen erforderlich.

In einigen Fällen können die erfindungsgemäßen Additionsverbindungen einen mehr oder weniger ausgeprägten Einfluß auf die Rheologie des Systems ausüben. Sie können daher in solchen Fällen auch zur Rheologiekontrolle eingesetzt werden, gegebenenfalls in Kombination mit anderen rheologischen Additiven wie pyrogener Kieselsäure, Schichtsilikaten (Bentoniten), hydrierten Rizinusölen, BYK^{®} -410, BYK^{®}-420, BYK^{®}-425 (BYK Chemie GmbH). Häufig sind hierbei synergistische Effekte zu beobachten. In vielen Fällen lassen sich auch die Korrosionsschutzeigenschaften von Beschichtungen durch den Einsatz der erfindungsgemäßen Additionsverbindungen verbessern.

Beispiele für pulver- oder faserförmige Feststoffe sind solche, wie sie gemäß dem Stand der Technik mit Dispergiermitteln beschichtet werden, insbesondere organische und anorganische Pigmente, die in Anstrichmitteln, Überzugsmitteln, Formmassen oder sonstigen Kunststoffen eingesetzt werden, und anorganische oder organische Füllstoffe, die zum Füllen oder Verstärken von Anstrichmitteln, Überzugsmitteln, Formmassen oder sonstigen Kunststoffen eingesetzt werden. Eine Untergruppe von derartigen Füllstoffen sind Fasern organischer und/oder anorganischer Natur, die ebenfalls als Füllstoffe oder Verstärkungsstoffe verwendet werden.

Beispiele für Pigmente sind Mono-, Di-, Tri- und Polyazopigmente, Oxazin-, Dioxazin-, Thiazin-Pigmente, Diketo-pyrrolo-pyrrole, Phthalocyanine, Ultramarin und andere Metallkomplex-Pigmente, indigoide Pigmente, Diphenylmethan-, Triarylmethan, Xanthen-, Acridin-, Chinacridon-, Methin-Pigmente, Anthrachinon, Pyranthron-, Perylen- und andere polycyclische Carbonyl-Pigmente, anorganische Pigmente auf Basis von Ruß, Graphit, Zink, Titandioxid, Zinkoxid, Zinksulfid, Zinkphosphat, Bariumsulfat, Lithophone, Eisenoxid, Ultramarin, Manganphosphat, Cobaltaluminat, Cobaltstannat, Cobaltzinkat, Antimonoxid, Antimonsulfid, Chromoxid, Zinkchromat, gemischten Metalloxiden auf Basis von Nickel, Bismut, Vanadium, Molybdän, Cadmium, Titan., Zink, Mangan, Cobalt, Eisen, Chrom, Antimon, Magnesium, Aluminium (beispielsweise Nickeltitangelb, Bismut-vanadat-molybdatgelb oder Chromtitangelb), magnetischen Pigmenten auf Basis von Reineisen, Eisenoxiden und Chromoxiden oder Mischoxyden, Metalleffektpigmente aus Aluminium, Zink, Kupfer oder Messing sowie Perlglanzpigmente, fluoreszierende und phosphoreszierende Leuchtpigmente. Weitere Beispiele sind nanoskalige organische oder anorganische Feststoffe mit Teilchengrößen unterhalb von 100 nm, wie bestimmte Rußtypen oder Partikel, die aus einem Metall-, oder Halbmetalloxid bzw. -hydroxid bestehen, sowie Partikel, die aus gemischten Metall- und/oder Halbmetalloxiden bzw. -hydroxiden- bestehen. Beispielsweise lassen sich die Oxide und/oder Oxidhydcoxide des Aluminiums, Siliziums, Zinks, Titans, usw. zur Herstellung solcher extrem feinteiligen Feststoffe heranziehen. Der Herstellprozess dieser oxidischen bzw. hydroxidischen bzw. oxidhydroxidischen Teilchen kann über die unterschiedlichsten Verfahren wie beispielsweise Ionenaustauschprozesse, Plasmaprozesse, Sol-Gel-Verfahren, Ausfällung, Zerkleinerung (z. B. durch Vermahlung) oder Flammhydrolyse usw. erfolgen.

Beispiele für pulver- oder faserförmige Füllstoffe sind zum Beispiel solche, die aufgebaut sind aus pulver- oder faserförmigen Teilchen von Aluminiumoxid, Aluminiumhydroxid, Siliziumdioxid, Kieselgur, Kieselerde, Quarz, Kieselgel, Talkum, Kaolin, Glimmer, Perlite, Feldspat, Schiefermehl, Calciumsulfat, Bariumsulfat, Calciumcarbonat, Calcit, Dolomit, Glas oder Kohlenstoff. Weitere Beispiele für Pigmente oder Füllstoffe finden sich beispielsweise in der EP-A-0 270 126. Auch Flammschutzmittel wie z. B. Aluminium- oder Magnesiumhydroxid und Mattierungsmittel wie z. B. Kieselsäuren lassen sich ebenfalls hervorragend dispergieren und stabilisieren.

### BEISPIELE

Im folgenden wird die Erfindung anhand von Beispiele veranschaulicht. Bei molekular uneinheitlichen Substanzen stellen die im folgenden angegebenen Molekulargewichte Durchschnittswerte des Zahlenmittels dar (was im übrigen, sofern nicht anders vermerkt, für die gesamte Beschreibung gilt). Die Molekulargewichte bzw. zahlenmittleren Molekulargewichte Mn können nach üblichen Verfahren bestimmt werden, z. B. durch Ermittlung der OH-Zahl, der Amin-Zahl, kryoskopisch oder per Gelpermeationschromatographie. Sofern nicht anders ausgeführt, handelt es sich bei Teilen um Gewichtsteile und bei Prozenten um Gewichtsprozente. Der freie NCO-Gehalt der zum Einsatz kommenden Polyisocyanate sowie der Reaktionsverlauf der NCO-Additionen wird nach EN ISO 9369 durch Abreaktion mit Butylamin und anschließende Titration des Aminüberschusses bestimmt. Diese Methoden sind auch beschrieben bei Saul Patai "The Chemistry of Cyanates and their Thioderivates", Part 1, Chapter 5-,1977. Die eingesetzte Polyphosphorsäure hat einen Gehalt von 85 % P₄O₁₀.

### Herstellung der Intermedia (= Produkte der Umsetzung zwischen uretdionhaltigen Polyisocyanaten und Verbindungen der Formel (I))

### Herstellung von Intermedio I1

### a) Caprolactonpolyester (Verbindung der Formel (I); mittleres Molekulargewicht Mn von 1200 g/mol):

Unter Schutzatmosphäre werden 20,1 Teile Hexadecanol und 79,9 Teile ε-Caprolacton homogenisiert, mit 0,002 Teilen Dibutylzinndilaurat versetzt und auf 160° C erhitzt. Man rührt bei dieser Temperatur, bis ein Festkörpergehalt von 98 % erreicht ist. Der erhaltene Polyester hat eine OH-Zahl von 47.

### b) Umsetzung eines aliphatischen HDI-Uretdions-mit a)

21,4 Teile aliphatisches HDI-Uretdion mit einem NCO-Gehalt von 21,8% werden mit 39,7 Teilen des unter a) beschriebenen Caprolactonpolyesters und 38,9 Teilen Methoxypolyethylenglykol 500 (Mn=500 g/mol) unter Zugabe von 0,01 Teilen Dibutylzinndilaurat so lange bei etwa 80°C gerührt, bis alle freien NCO-Gruppen abreagiert sind und titrimetrisch kein NCO-Gehalt mehr nachweisbar ist.

### Allgemeine Herstellvorschrift für die Intermedios:

Das angegebene Polyisocyanat wird mit den in der nachfolgenden Tabelle angegebenen Komponenten gemischt. Dann wird auf 80°C aufgeheizt, 0,01% Dibutylzinndilaurat zugegeben und bei 80°C gerührt, bis der NCO-Gehalt auf ≤0,1% gesunken ist.

Die so erhaltenen Zwischenprodukte können unmittelbar nach Herstellung weiter wie nachstehend beschrieben mit aminofunktionellen Verbindungen umgesetzt werden. Da sie bevorzugt keine freien NCO-Gruppen mehr enthalten, sind sie lagerstabil und können daher anstelle der unmittelbaren weiteren Umsetzung auch über einen beliebigen Zeitraum für eine spätere Verwendung gelagert werden.
Die Herstellung der Polyester erfolgt wie unter Intermedio I1 a) beschrieben.

**Tabelle 1 - Intermedios**

| **Nr.** | **Polyisocyanat** | **Gew. Teile** | **Komponente 1** Verbindung der Formel (I) | **Gew. Teile** | **Komponente 2** Verbindung der Formel (I) | **Gew. Teile** | **NCO Umsatz in%** |
|---|---|---|---|---|---|---|---|
| I1 | P1 | 21,4 | C16 CPE 1200 | 39,7 | MPEG 500 | 38,9 | 30/70 |
| I2 | P1 | 15,8 | EO/PO 1100 | 72,7 | M350 CPE 700 | 11,5 | 80/20 |
| I3 | P2 | 8,5 | EO/PO 2000 | 91,5 | | | 100/- |
| I4 | P2 | 17,5 | C10 CPE 700 | 40,3 | PO 1100 | 42,2 | 60/40 |
| I5 | P3 | 31,5 | M500 CPE 900 | 63,7 | n-Decanol | 4,8 | 70/30 |
| I6 | P1 | 14,8 | EO/PO 1100 | 85,2 | | | 100/- |
| I7 | P1 | 11,8 | EO/PO 1400 | 88,2 | | | 100/- |
| I8 | P1 | 10,1 | EO/PO 1700 | 89,9 | | | 100/- |
| I9 | P1 | 19,8 | C10 CPE 1000 | 50,1 | PEG 600 | 30,1 | 50/50 |
| I10 | P1 | 25,6 | Monophenylglykol | 9,4 | PEG 1000 | 65,0 | 50/50 |
| I11 | P1 | 12,2 | EO/PO 1700 | 54,4 | Jeffamin M 1000 | 33,4 | 50/50 |
| I12 | P1 | 9,0 | C10 CVPE 2000 | 91,0 | | | 100/- |
| I13 | P1 | 24,4 | C4 CPE 600 | 75,6 | | | 100/- |
| I14 | P1 | 13,8 | C16 CPE 1200 | 86,2 | | | 100/- |
| I15 | P1 | 13,8. | C4-CPE 1200 | 86,2 | | | 100/- |
| I16 | P1 | 24,4 | C16 CPE 600 | 75,6 | | | 100/- |
| I17 | P1 | 21,4 | MPG-CPE 1200 | 86,2 | | | 100/- |
| I18 | P1 | 8,8 | EO/PO 1700 CPE 2000 | 91,2 | | | 100/- |
| I19 | P1 | 24,4 | HEA-CPE 600 | 75,6 | | | 100/- |
| I20 | P1 | 13,8 | PDMS 1200 | 86,2 | | | 100/- |

| | | | | | | | |
|---|---|---|---|---|---|---|---|
| **Legende zu Tabelle 1:** P1 = Aliphatisches HDI-Uretdion mit einem freien NCO-Gehalt von 21,8% z. B. Desmodur N3400, Bayer AG P2 = Aromatisches TDI-Uretdion mit einem freien NCO-Gehalt von 22,95 % z. B. Desmodur TT/G, Rheinchemie P3 = Aliphatisches IDPI-Uretdion mit einem freien NCO-Gehalt von 13,5% z. B. Crelan VP LS 2147, Bayer AG C16 CPE 600, 1200 = Hexadecanolgestartete Monohydroxyfunktionelle ε-Caprolactonpolyester, mittleres Molekulargewicht Mn = 600 bzw. 1200 g/mol C4 CPE 600, 1200 = n-Butanolgestartete Monohydroxyfunktionelle ε-Caprolactonpolyester, mittleres Molekulargewicht Mn = 600 bzw. 1200 g/mol MPEG 500 = Methoxypolyethylenglykol, mittleres Molekulargewicht Mn = 500 g/mol EO/PO 1100, 1700, 2000 = Butanolgestartete monohydroxyfunktionelle EO/PO-Polyether (EO:PO 1:1), mittleres Molekulargewicht Mn = 1100, 1700, 2000 g/mol EO/PO 1400 = Butanolgestarteter monohydroxyfunktioneller EO/PO-Polyether (EO:PO 3:1), mittleres Molekulargewicht Mn = 1400 g/mol M350 CPE 700 = MPEG 350-gestarteter ε-Caprolactonpolyester, mittleres Molekulargewicht Mn = 700 g/mol M500 CPE 900 = MPEG 500-gestarteter ε-Caprolactonpolyester, mittleres Molekulargewicht Mn = 900 g/mol C10 CPE 700, 1000 = iso-Decanolgestartete monohydroxyfunktionelle ε-Caprolactonpolyester, mittleres Molekulargewicht Mn = 700, 1000 g/mol PO 1100 = Monohydroxyfunktioneller PO Polyether, mittleres Molekulargewicht Mn=1100 g/mol MPG-CPE 1200 = Monophenylglykolgestarteter monohydroxyfunktioneller ε-Caprolactonpolyester, mittleres Molekulargewicht Mn = 1200 g/mol PEG 600, 1000 = Polyethylenglykol (dihydroxyfunktionell), mittleres Molekulargewicht Mn = 600 bzw. 1000 g/mol Jeffamin M 1000 = Monoaminofunktioneller EO/PO Polyether, (EO:PO 6:1), mittleres Molekulargewicht Mn = 1000 g/mol C10 CVPE 2000 = iso-Decanolgestarteter Polyester aus ε-Caprolacton und δ-Valerolacton im molaren Verhältnis 3:1, zahlenmittleres Molekulargewicht Mn = 2000 g/mol. EO/PO 1700 CPE 2000 = EO/PO 1700 (monohydroxyfunktionell, Mn 1700, s.o.) gestarteter ε-Caprolactonpolyester, mittleres Molekulargewicht Mn = 2000 g/mol HEA-CPE 600 = Hydroxyethylacrylatgestarteter monohydroxyfunktioneller ε-Caprolactonpolyester, mittleres Molekulargewicht Mn = 1200 g/mol PDMS 1200 = Monohydroxyfunktionelles Hydroxypropyl-polydimethylsiloxan, Mn = 1200 g/mol Bei 19 und 110 wird das PEG im Überschuß eingesetzt, so dass nur ungefähr 50% der im PEG vorhandenen OH-Gruppen mit NCO umgesetzt werden. | | | | | | | |

### Herstellungsbeispiel 1 der erfindungsgemäßen Biuretverbindungen

In einem mit Rückflusskühler und Rührer versehenen Reaktionsgefäß werden 48,8 Teile des uretdionhaltigen Vorproduktes Intermedio I1 vorgelegt und auf 90°C geheizt. Sobald diese Temperatur erreicht ist, werden 1,2 Teile Ethanolamin zugegeben. Die Reaktion kann etwas exotherm sein, braucht aber nicht gekühlt werden, die frei werdende Energie wird zur Reaktionsbeschleunigung benutzt. Bei der sich einstellenden Temperatur wird die Reaktionsmischung so lange gerührt, bis die Uretdionaddition weitgehend beendet ist. Die Reaktion lässt sich anhand der Abnahme der Aminzahl verfolgen: > 95 % der vorhandenen Aminogruppen werden umgesetzt. Anschließend wird mit 50 Teilen PMA (Propylenglykolmonomethyletheracetat) verdünnt. Das so erhaltene Produkt hat einen Festkörpergehalt von 50%.

### Allgemeine Herstellvorschrift zu den in der nachfolgenden Tabelle beschriebenen Herstellungsbeispielen :

Das Intermedio wird vorgelegt und gegebenenfalls in einem Teil des angegebenen Lösemittels verdünnt und erwärmt. Primäre Amine und Aminoalkohole werden bei 90°C, sekundäre Amine und Aminoalkohole bei 140 °C und säurefunktionelle Amine bei 105°C zugegeben. Die Reaktion kann etwas exotherm sein, braucht aber nicht gekühlt werden, die frei werdende Energie wird zur Reaktionsbeschleunigung benutzt. Bei der sich einstellenden Temperatur wird die Reaktionsmischung so lange gerührt, bis die Uretdionaddition anhand der Aminzahlabnahme weitgehend beendet ist. Anschließend kann abgekühlt und abgefüllt werden.

**Tabelle 2 - Herstellungsbeispiele**

| **Nr.** | **Intermedio -Nr.** | **Gew. % Intermedio** | **Amin** | **Gew.% Amin** | **Lösemittel** | **Gew. %** | **Festkörper -gehalt %** |
|---|---|---|---|---|---|---|---|
| 1 | I1 | 48,8 | 2-Ethanolamin | 1,2 | PMA | 50 | 50 |
| 2 | I2 | 96,2 | PAB | 3,8 | - | | 100 |
| 3 | I3 | 78,2 | MAB | 1,8 | BG | 20 | 80 |
| 4 | I4 | 93,6 | AMMO | 6,4 | - | | 100 |
| 5 | I5 | 66,3 | Aminoethansulfonsäure | 3,7 | PM | 30 | 70 |
| 6 | I6 | 96,4 | Octylamin | 3,6 | - | | 100 |
| 7 | I6 | 97,0 | Benzylamin | 3,0 | - | | 100 |
| 8 | I7 | 98,4 | Propanolamin | 1,6 | - | | 100 |
| 9 | I7 | 96,1 | Dibenzylamin | 3,9 | - | | 100 |
| 10 | I7 | 97,1 | PAB | 2,9 | - | | 100 |
| 11 | I8 | 97,2 | Benzylamin/Dibenzylamin **(50:50 mol %)** | 1,0/1,8 | - | | 100 |
| 12 | I9 | 90,4 | (N-Phenylamino-methyl)methyldimethoxysilan | 9,6 | PMA/PM (1:1) | 50 | 50 |
| 13 | I10 | 57,7 | 2-Phenylethylamin | 2,3 | PMA | 40 | 60 |
| 14 | I11 | 96,3 | Dibenzylamin | 3,7 | - | | 100 |
| 15 | I12 | 98,2 | Benzylamin | 1,8 | - | | 100 |
| 16 | I13 | 90 | AMMO | 10 | | | 100 |
| 17 | I14 | 94 | AMMO | 6 | | | 100 |
| 18 | I15 | 94 | AMMO | 6 | | | 100 |
| 19 | I19 | 90 | AMMO | 10 | | | 100 |
| 20 | I13 | 92,7 | AMMO | 7,2 | | | 100 |
| 21 | I13 | 94,7 | AMMO | 5,3 | | | 100 |
| 22 | I17 | 93 | AMMO | 7 | | | 100 |
| 23 | I13 | 97 | 2-Ethanolamin | 3 | | | 100 |
| 24 | I16 | 97 | 2-Ethanolamin | 3 | | | 100 |
| 25 | I15 | 98,3 | 2-Ethanolamin | 1,7 | | | 100 |
| 26 | I20 | 98,3 | 2-Ethanolamin | 1,7 | | | 100 |
| 27 | I18 | 97,4 | 6-Amino-1-hexanol | 2,6 | | | 100 |
| 28 | I16 | 96,3 | Benzylamin/p-XDA **(50:50 mol %)** | 2,3/1,4 | | | 100 |
| | | | | | | | |

| | | | | | | | |
|---|---|---|---|---|---|---|---|
| **Legende:** AMMO= (3-Aminopropyl)trimethoxysilan PAB = Para-Aminobenzoesäure MAB = Meta-Aminobenzoesäure PMA = Propylenglykol-1-methyletheracetat BG = Butylglykol PM = Propylenglykol-1-methylether p-XDA = para-Xylylendiamin | | | | | | | |

### Herstellungsbeispiel 29

46,9 Teile des nach Herstellungsbeispiel 23 erhaltenen Additionsproduktes werden mit 3,1 Teilen Polyphosphorsäure gemischt und 3 Stunden bei 80°C gerührt. Anschließend wird mit 50 Teilen PMA verdünnt. Das so erhaltene flüssige Produkt hat einen Festkörpergehalt von 50% und eine Säurezahl von 40 mg KOH/g.

### Herstellungsbeispiel 30

In einem mit Rückflusskühler und Rührer versehenen Reaktionsgefäß werden 97,1 Teile der erfindungsgemäßen Biuretverbindung 1 vorgelegt und auf 120°C erwärmt. Nach Zugabe von 0,005 Teilen para-Toluolsulfonsäure werden 2,9 Teile Phthalsäureanhydrid zugegeben. Die Reaktion kann etwas exotherm sein, braucht aber nicht gekühlt werden, die frei werdende Energie wird zur Reaktionsbeschleunigung benutzt. Bei der sich einstellenden Temperatur wird die Reaktionsmischung so lange gerührt, bis die Addition anhand der Abnahme der Anhydridsäurezahl und des Erreichens einer Säurezahl von 11 mg KOH/g weitgehend beendet ist.

Anschließend kann abgekühlt und abgefüllt werden. Das Reaktionsprodukt hat einen Festkörpergehalt von 51 %.

### Herstellungsbeispiel 31 (nicht erfindungsgemäße Vergleichsverbindung)

### (Beispiel aus EP 1 453 875)

In einem mit Rückflusskühler und Rührer versehenen Reaktionsgefäß werden 94,5 Teile eines butanolgestarteten monohydroxyfunktionellen Polyethers EO/PO 1400 (EO : PO = 3:1, Mn = 1400g/mol) vorgelegt und auf 70°C erwärmt. Nach Zugabe von 0,01 Teilen Dibutylzinndilaurat werden 5,5 Teile Hexamethylendiisocyanat zugegeben und bei 80°C so lange gerührt, bis titrimetrisch kein NCO-Gehalt mehr nachweisbar ist.

Anschließend kann abgekühlt und abgefüllt werden. Das Reaktionsprodukt hat einen Festkörpergehalt von 100%.

### Herstellungsbeispiel 32

47,1 Teile des nach Herstellungsbeispiel 24 erhaltenen Additionsproduktes werden mit 2,9 Teilen Polyphosphorsäure gemischt und 3 Stunden bei 80°C gerührt

Anschließend wird mit 50 Teilen PMA verdünnt. Das so erhaltene flüssige Produkt hat einen Festkörpergehalt von 50% und eine Säurezahl von 34 mg KOH/g.

### Herstellungsbeispiel 33

48 Teile des nach Herstellungsbeispiel 25 erhaltenen Additionsproduktes werden mit 2 Teilen Polyphosphorsäure gemischt und 3 Stunden bei 80°C gerührt. Anschließend wird mit 50 Teilen PMA verdünnt. Das so erhaltene flüssige Produkt hat einen Festkörpergehalt von 50% und eine Säurezahl von 27 mg KOH/g.

### Herstellungsbeispiel 34

48 Teile des nach Herstellungsbeispiel 26 erhaltenen Additionsproduktes werden mit 2 Teilen Polyphosphorsäure gemischt und 3 Stunden bei 80°C gerührt. Anschließend wird mit 50 Teilen PMA verdünnt. Das so erhaltene flüssige Produkt hat einen Festkörpergehalt von 50% und eine Säurezahl von 25 mg KOH/g.

### Verwendungsbeispiele

Zur Beurteilung der erfindungsgemäßen Verbindungen wurden bindemittelfreie Pigmentkonzentrate hergestellt. Nach 7 Tagen Lagerung bei 20°C wurde deren Viskosität bei verschiedenen Schergeschwindigkeiten bewertet. Je niedriger die Viskosität der Pasten, desto besser das Dispergierergebnis.

Zur Herstellung solcher Pigmentkonzentrate werden die in den nachstehenden Tabellen angegebenen Gewichtsanteile Rohstoffe in einen 100 mL doppelwandigen Dispermatentopf eingewogen. Zur eingewogenen Rohstoffmenge wird die gleiche Menge Glasperlen mit 2mm Durchmesser zugesetzt und dann mit einer 45mm Teflonscheibe unter Stadtwasserkühlung dispergiert.
Bei den Beispielpigmenten Hostapermblau BT 729 (Cu-Phthalocyaninpigment der Clariant AG) und Hostapermrotviolett ER02 (Chinacridonpigment der Clariant AG) beträgt die Dispergierzeit 30 Minuten jeweils bei einer Umfangsgeschwindigkeit (Teflonscheibe) von 23 m/s. Nach Abkühlung der Paste wird das restliche Wasser eingerührt.

Die so dispergierten Pasten werden über ein Papiersieb (Maschenweite 80µm) abgesiebt und in Glasflaschen abgefüllt. Man erhält mit den erfindungsgemäßen Verbindungen fließfähige Pigmentpasten mit sehr guten rheologischen Eigenschaften.

Die Viskositäten der Pigmentpasten wurden bei 20°C mit dem Rheometer Stresstech mit folgenden Parametern gemessen:
Kegel-Platte Meßsystem, Kegel 4cm 1° ; CSR Messung (Auf- und Abkurve)

**Pastenrezepturen:**

| (Mengenangaben in Gewichtsteilen) | | | | | | |
|---|---|---|---|---|---|---|
| **Bindemittelfreie Pasten** | A1* | A2 | A3 | A4 | A5 | A6 |
| Wasser | 33 | 33 | 33 | 33 | 33 | 33 |
| Additionsverbindung nach Herstellungsbeispiel | 6,5 | 6,5 | 6,5 | 6,5 | 6,5 | 6,5 |
| Byk^{®}-017 | 0,5 | 0,5 | 0,5 | 0,5 | 0,5 | 0,5 |
| Hostapermblau BT 729D | 25 | 25 | 25 | 25 | 25 | 25 |
| Wasser | 13 | 13 | 13 | 13 | 13 | 13 |

| **Dispergieren** | | | | | | |
|---|---|---|---|---|---|---|
| Wasser | 22 | 22 | 22 | 22 | 22 | 22 |
| Summe | 100 | 100 | 100 | 100 | 100 | 100 |
| | | | | | | |

| **Bindemittelfreie Pasten** | B1* | B2 | B3 | B4 | B5 | B6 |
|---|---|---|---|---|---|---|
| Wasser | 41,7 | 41.7 | 41.7 | 41.7 | 41.7 | 41,7 |
| Additionsverbindung nach Herstellungsbeispiel | 7,8 | 7,8 | 7,8 | 7,8 | 7,8 | 7,8 |
| Byk^{®}-017 | 0,5 | 0,5 | 0,5 | 0,5 | 0,5 | 0,5 |
| Hostapermrotviolett ER02 | 30 | 30 | 30 | 30 | 30 | 30 |

| **Dispergieren** | | | | | | |
|---|---|---|---|---|---|---|
| Wasser | 20 | 20 | 20 | 20 | 20 | 20 |
| Summe | 100 | 100 | 100 | 100 | 100 | 100 |

| | | | | | | |
|---|---|---|---|---|---|---|
| *: nicht erfindungsgemäß BYK^{®}- O17: Silikonentschäumer der BYK Chemie GmbH | | | | | | |

### Ergebnisse:

**Viskositäten der Pasten mit Pigment Hostapermblau BT 729D:**

| **Scherrate** | **3/s** | **10/s** | **100/s** | **1000/s** |
|---|---|---|---|---|
| A1*, Bsp. Nr. 31 | 18700 | 5390 | 414 | 56,2 |
| A2, Bsp. Nr. 6 | 20,6 | 20,3 | 17,5 | 13,9 |
| A3, Bsp. Nr. 9 | 44,6 | 41 | 29,6 | 17,5 |
| A4, Bsp. Nr. 7 | 29,6 | 26,6 | 21,3 | 14,2 |
| A5, Bsp. Nr. 10 | 14,7 | 15,9 | 13,6 | 11 |
| A6, Bsp. Nr. 27 | 33,5 | 30,2 | 23,8 | 15,6 |

**Viskositäten der Pasten mit Pigment Hostapermviolett ER02:**

| **Scherrate** | **31s** | **10/s** | **100/s** | **1000/s** |
|---|---|---|---|---|
| B1*, Bsp. Nr. 31 | 27800 | 6760 | 478 | 58,6 |
| B2, Bsp. Nr. 6 | 108 | 92,9 | 59,3 | 35,3 |
| B3, Bsp. Nr. 9 | 274 | 201 | 99,4 | 46,7 |
| B4, Bsp. Nr. 7 | 114 | 94,1 | 59,6 | 33,3 |
| B5, Bsp. Nr. 10 | 119 | 101 | 62,4 | 34,9 |
| B6, Bsp. Nr. 27 | 123 | 104 | 65,7 | 36,2 |

Die mit der nicht erfindungsgemäßen Vergleichsverbindung hergestellten Pigmentpasten A1 und B1 zeigen über den geprüften Scherbereich aufgrund ihrer durch mangelhafte Stabilisierung ausgeprägten Flockutationsneigung die höchsten Viskositäten, insbesondere im unteren Scherbereich.

Die hergestellten Pigmentpasten A1 bis A6 und 81 bis B6 wurden mit einem nach folgender Rezeptur hergestelltem 2-Komponenten Polyurethan-Klarlack abgemischt und die Glanzeinheiten der Volltöne bestimmt.

**2K-PUR-Klarlack:**

| **Komponente A** | Gewichtsteile |
|---|---|
| Setalux 6510 AQ-42 | 53,6 |
| demin. Wasser | 10 |
| Solvesso 100 (SN) | 1,3 |
| BYK^{®}-345 | 0,2 |
| BYK^{®}-333 | 0,2 |

| **Komponente B** | |
|---|---|
| Bayhydur3100 | 11 |
| Bayhydur 2150/1 | 20,4 |
| Butylacetat | 2,6 |
| Butylglykolacetat | 1 |

| | |
|---|---|
| Mischungsverhältnis Komp. A : Komp. B = 65:35 nach Gewicht Setalux 6510 AQ-42: Polyacrylatpolyol der Fa. AKZO (OH-Zahl = 4.2: Festkörper = 41-43 % in H₂0/Butylglykol) Solvesso 100: aromatischer Kohlenwasserstoff (C₉ - C₁₀) von ExxonMobil BYK^{®}-345: Silikontensid-derBYK Chemie GmbH BYK^{®}-333: Silikonoberflächenadditiv der BYK Chemie GmbH Bayhydur 3100: Hydrophiles, aliphatisches Polyisocyanat auf Basis Hexamethylendiisocyanat von BAYER MaterialScience (NCO-Gehalt = 17,4 +/- 0,5 %) Bayhydur VP LS 2150/1: Wasserdispergierbares Polyisocyanat auf Basis Isophorondiisocyanat von BAYER MaterialScience (NCO-Gehalt = 9,4 +/- 0,5 %) | |

**Die Pasten werden mit o.g. Klarlack wie folgt abgemischt: (Mengenangaben in Gewichtsteilen)**

| | VT 1-6 | VT 7-12 |
|---|---|---|
| Komponente A | 14 | 14 |
| Pigmentpaste A1-A6 | 2,2 | |
| Pigmentpaste B1-B6 | | 2,8 |
| Komponente B | 7,1 | 7,1 |
| Demin. Wasser | 7,5 | 7,5 |

Die Abmischungen wurden anschließend auf eine Folie per Aufgießen appliziert und 7 Tage bei Raumtemperatur getrocknet. Die Glanzeinheiten der Volltöne 1 bis 12 wurden mittels des Glanzmessgerätes Haze-Gloss der Firma Byk-Gardner nach DIN 67530 bei einem Winkel von 20° bestimmt.

**Volltöne mit Hostapermblau BT 729D:**

| VT | Glanz 20° |
|---|---|
| 1* | 74 |
| 2 | 78 |
| 3 | 76 |
| 4 | 80 |
| 5 | 77 |
| 6 | 77 |

**Volltöne mit Hostapermrotviolett ER02:**

| VT | Glanz 20° |
|---|---|
| 7* | 80 |
| 8 | 93 |
| 9 | 89 |
| 10 | 100 |
| 11 | 95 |
| 12 | 90 |

| | |
|---|---|
| *: nicht erfingdungsgemäß | |

Die mit den erfindungsgemäßen Verbindungen hergestellten Volltöne VT 2 bis 6 und VT 8 bis 12 zeigen aufgrund ihrer verbesserten Pigmentstabilisierung im Vergleich zur nicht erfindungsgemäßen Vergleichsverbindung höhere Glanzwerte.

## Patentansprüche

1. Additionsverbindungen, **dadurch gekennzeichnet, dass** die Additionsverbindungen erhältlich sind durch die Umsetzung von
a) einem oder mehreren uretdiongruppenhaltigen Polyisocyanaten mit
b) einer oder mehreren Verbindungen der Formel (I)
Y-(XH)ₙ (I)
wobei
XH für eine gegenüber Isocyanaten reaktive Gruppe steht und
Y für eine nicht gegenüber Isocyanaten reaktive, monomere oder polymere organische Gruppe steht, die eine oder mehrere aliphatische, cycloaliphatische, arallphatische und/oder aromatische Gruppen umfasst,
wobei Y eine zahlenmittlere Molmasse kleiner 20000 g/mol besitzt und n für 1, 2 oder 3 steht und
wobei für mindestens 60 mol% der Verbindungen der Formel (I) gilt, dass n = 1 Ist,
unter der Vorgabe, dass mindestens 50% der freien Isocyanatgruppen der Komponente a) mit den Verbindungen der Formel (I) zu einem Uretdiongruppen enthaltendem Zwischenprodukt umgesetzt werden,
wobei anschließend das Zwischenprodukt mit
c) einer oder mehreren Verbindungen der allgemeinen Formel (II)
Z-(NHR)ₘ (II)
zur Reaktion gebracht wird,
worin
R für Wasserstoff, einen aliphatischen, cycloaliphatischen, araliphatischen und/oder aromatischen Rest mit bis zu 38 C-Atomen oder einen Polyoxyalkylen-Rest steht,
m für 1 steht und
Z einen nicht-basischen Rest mit einer zahlenmittleren Molmasse kleiner 10000 g/mol darstellt und eine oder mehrere der folgenden Bedeutungen hat:
A) ein C₁-C₅₀-Alkylrest, der linear, verzweigt, gesättigt oder ein bis mehrfach ungesättigt sein kann, ein C₄-C₃₆-Cycloalkylrest oder
B) ein C₆-C₃₆-Arylrest oder C₇-C₃₆-Aralkylrest oder
C) Rest einer Polyalkylenoxldverbindung oder
D) Rest eines gegebenenfalls polyether und/oder polyesterhaltigen Polysiloxans,
wobei Z gegebenenfalls folgende funktionelle Gruppen aufweisen kann:
- -OH
- -COOH
- -SO₃H
- -PO₃H₂
- -SI(OR)₃ und -SIR(OR)₂
wobei die Hydroxylgruppen gegebenenfalls mit Polyphosphorsäure oder P₂O₅ oder mit Polycarbonsäuren mit mindestens zwei Carboxylgruppen oder deren Anhydriden in einer solchen Menge umgesetzt werden, dass auf jede umzusetzende OH-Gruppe mindestens 0,8 Moleküle Polycarbonsäure oder Polycarbonsäureanhydrid eingesetzt wird;
sowie Salze der Additionsverbindungen
unter der Maßgabe, daß alle gegebenenfalls noch vorhandenen freien NCO-Gruppen und mindestens 20% der ursprünglich eingesetzten Uretdiongruppen mit Z-(NHR)ₘ zur Reaktion gebracht werden.

2. Additionsverbindungen nach Anspruch 1, wobei XH die Reste -OH, -NH₂, -NHR, -SH oder-COOH, bevorzugt -OH, -NH₂ oder -NHR, darstellt.

3. Additionsverbindungen nach Anspruch 1 oder 2, wobei Y gegebenenfalls die Heteroatome O, S, Si und/oder N und/oder Ether-, Urethan-, Carbonat-, Amid-, Slloxan- und/oder Estergruppen enthält, und gegebenenfalls Wasserstoff gegen Halogen substituiert ist.

4. Additionsverbindungen nach einem der Ansprüche 1 bis 3, wobei R eine oder mehrere der folgenden Bedeutungen hat:
A) Wasserstoff, ein C₁-C₃₆-Alkylrest, ein C₄-C₃₆-Aycloalkyl-, ein C₆-C₃₆-Aryl- oder ein C₇-C₃₆-Aralkylrest oder
B) Rest einer Polyalkylenoxidverbindung mit einer zahlenmittleren Molmasse kleiner 5000 g/mol
und gesättigt oder ungesättigt sein kann.

5. Additionsverbindungen nach einem der Ansprüche 1 bis 4, wobei mindestens zwei verschiedene Verbindungen der Formel (I) eingesetzt werden.

6. Additionsverbindungen nach einem der Ansprüche 1 bis 5, **dadurch gekennzeichnet, dass** sie keine ungesättigten Gruppen enthalten.

7. Additionsverbindungen nach einem der Ansprüche 1 bis 6, wobei als Verbindungen der Formel (I) hydroxyfunktionelle Polyether, hydroxyfunktionelle Polyester, hydroxyfunktionelle Polyether-Polyester und/oder aliphatische und/oder cycloaliphatische Alkohole mit 2 bis 30 Kohlenstoffatomen, deren Wasserstoffatome gegebenenfalls teilweise durch Halogen und/oder Arylreste ersetzt sind, eingesetzt werden.

8. Additionsverbindungen nach einem der Ansprüche 1 bis 7, **dadurch gekennzeichnet, dass** es sich bei den uretdiongruppenhaltigen Polyisocyanaten um cyclische Dimerisierungsprodukte von Diisocyanaten auf Basis von Hexamethylendiisocyanat, Isophorondiisocyanat und/oder Toluylendllsocyanat handelt.

9. Verwendung von mindestens einer Additionsverbindung aus einem der Ansprüche 1 bis 8 bei der Herstellung oder Verarbeitung von Lacken, Druckfarben, Tinten, Papierstrich, Leder- und Textilfarben, Pasten, Pigmentkonzentraten, Keramiken, kosmetischen Zubereitungen, Gleßmassen und/oder Formmassen auf Basis von synthetischen, halbsynthetischen oder natürlichen makromolekularen Stoffen.

10. Verwendung von mindestens einer der Additionsverbindungen aus einem der Ansprüche 1 bis 8 zur Herstellung von Pigmente und/oder Füllstoffe enthaltenden Pigmentkonzentraten, Lacken, Pasten und/oder Formmassen.

11. Verwendung von mindestens einer der Additionsverbindungen aus einem der Ansprüche 1 bis 8 zur Herstellung eines Pigmentlacks, wobei ein Lackbindemittel und/oder Lösemittel, Pigmente und gegebenenfalls Füllstoffe, die Additionsverbindung und übliche Lackhilfsstoffe miteinander vermischt werden.

12. Verwendung einer Additionsverbindung aus einem der Ansprüche 1 bis 8 zur Herstellung eines pigmentierten Überzugs auf einem Substrat, wobei mit der Additionsverbindung ein Pigmentlack hergestellt wird, wobei der Pigmentlack auf das Substrat aufgebracht wird und wobei der auf das Substrat aufgebrachte Pigmentlack eingebrannt oder ausgehärtet oder vernetzt wird.

13. Verwendung von mindestens einer Additionsverbindungen aus einem der Ansprüche 1 bis 8 zur Herstellung von disporgierbaren pulverpartlkel- und/oder faserpartikelförmigen Feststoffen, insbesondere von dlspergierbaren Pigmenten oder Füllstoffen, wobei die Partikel mit der Additionsverbindung beschichtet sind.

14. Verfahren zur Herstellung von Additionsverbindungen, **dadurch gekennzeichnet, dass**
(A)
(a) ein oder mehrere uretdiongruppenhaltige Polyisocyanate mit
(b) einer oder mehreren Verbindungen der Formel (I)
Y-(XH)ₙ (I)
wobei
XH für eine gegenüber isocyanaten reaktive Gruppe steht und
Y für eine nicht gegenüber isocyanaten reaktive, monomere oder polymere organische Gruppe steht, die eine oder mehrere aliphatische, cycloallphatlsche, aliphatische und/oder aromatische Gruppen umfaßt,
wobei Y eine zahlenmittlere Molmasse kleiner 20000 g/mol besitzt und n für 1,2 oder 3 steht und
wobei für mindestens 50 Mol-% der Verbindungen der Formel (I) gilt, dass n = 1 ist,
unter der Vorgabe umgesetzt werden, dass mindestens 50% der freien Isocyanatgruppen der Komponente (a) mit den Verbindungen der Formel (I) zu einem Uretdiongruppen enthaltendem Zwischenprodukt umgesetzt werden,
(B) das Zwischenprodukt mit
c) einer oder mehreren Verbindungen der allgemeinen Formel (II)
Z-(NHR)ₘ (II)
zur Reaktion gebracht wird,
worin
R für Wasserstoff, einen aliphatischen, cycloaliphatischen, aliphatischen und/oder aromatischen Rest mit bis zu 36 C-Atomen oder einen Polyoxyalkylen-Rest steht,
m für 1 steht und
Z einen nicht-basischen Rest mit einer zahlenmittieren Molmasse kleiner 10000 g/mol darstellt und eine oder mehrere der folgenden Bedeutungen hat:
A) ein C₁-C₅₀-Alkylrest, der linear, verzweigt, gesättigt oder ein bis mehrfach ungesättigt sein kann, ein C₄-C₃₈-Cycloalkylrest oder
B) ein C₈-C₃₈-Arylrest oder C₇-C₃₆-Aralkylrest oder
C) Rest einer Polyalkylenoxidverbindung oder
D) Rest eines gegebenenfalls polyether- und/oder polyesterhaltigen Polysiloxans,
wobei Z gegebenenfalls folgende funktionelle Gruppen aufweisen kann:
- -OH
- -COOH
- -SO₃H
- -PO₃H₂
- -SI(OR)₃ und -SiR(OR)₂, und
(C) optional im Reaktionsprodukt vorhandene Hydroxylgruppen mit Polyphosphorsäure oder P₂O₅ oder mit Polycarbonsäuren mit mindestens zwei Carboxylgruppen oder deren Anhydriden in einer solchen Menge umgesetzt werden, dass auf jede umzusetzende OH-Gruppe mindestens 0,8 Moleküle Polycarbonsäure oder Polycarbonsäureanhydrid eingesetzt wird und
(D) optional die Additionsverbindungen mit organischen oder anorganischen Basen umgesetzt werden
unter der Maßgabe, daß alle gegebenenfalls noch vorhandenen freien NCO-Gruppen und mindestens 20% der ursprünglich eingesetzten Uretdiongruppen mit Z-(NHR)ₘ zur Reaktion gebracht werden.

## Claims

1. Addition compounds, **characterised in that** the addition compounds can be obtained by reacting
a) one or more polyisocyanates containing uretdione groups with
b) one or more compounds of formula (I)
Y-(XH)ₙ (I),
wherein
XH represents a group reactive to isocyanates, and
Y represents a monomeric or polymeric organic group not reactive to isocyanates and comprising one or more aliphatic, cycloaliphatic, araliphatic and/or aromatic groups,
wherein Y has a number average molar mass of less than 20000 g/mol, and n represents 1, 2 or 3, and
wherein n = 1 for at least 50 mol % of the compounds of formula (I),
on the condition that at least 50 % of the free isocyanate groups of the component a) are reacted with the compounds of the formula (I) to obtain an intermediate product containing uretdione groups,
wherein subsequently the intermediate product is brought to react with
c) one or more compounds of the general formula (II)
Z-(NHR)ₘ (II),
wherein
R represents hydrogen, an aliphatic, cycloaliphatic, araliphatic and/or aromatic radical with up to 36 C atoms, or a polyoxyalkylene radical,
m represents 1, and
Z represents a non-basic radical with a number average molar mass of less than 10000 g/mol, and represents one or more of the following:
A) a C₁-C₅₀ alkyl radical that can be linear, branched, saturated or mono- or polyunsaturated, a C₄-C₃₆ cycloalkyl radical or
B) a C₆-C₃₆ aryl radical or a C₇-C₃₆ aralkyl radical or
C) a radical of a polyalkylene oxide compound or
D) a radical of a polysiloxane, possibly containing a polyether and/or polyester,
wherein Z can possibly contain the following functional groups:
- -OH
- -COOH
- -SO₃H
- -PO₃H₂
- -Si(OR)₃ and -SiR(OR)₂,
wherein the hydroxyl groups are possibly reacted with polyphosphoric acid or P₂O₅ or with polycarboxylic acids having at least two carboxyl groups or their anhydrides, in such a quantity that for each OH group to be reacted, at least 0.8 molecules of polycarboxylic acid or polycarboxylic acid anhydride are used;
as well as salts of the addition compounds,
on the condition that all free NCO groups possibly still present, and at least 20 % of the initially used uretdione groups are brought to react with Z-(NHR)ₘ.

2. Addition compounds according to claim 1, wherein XH represents the radicals -OH, -NH₂, -NHR, -SH or-COOH, preferably -OH, -NH₂ or -NHR.

3. Addition compounds according to claim 1 or 2, wherein Y possibly contains the heteroatoms O, S, Si and/or N, and/or ether, urethane, carbonate, amide, siloxane and/or ester groups, and wherein possibly hydrogen is substituted with halogen.

4. Addition compounds according to any one of claims 1 to 3, wherein R represents one or more of the following:
A) hydrogen, a C₁-C₃₆ alkyl radical, a C₄-C₃₆ cycloalkyl, a C₆-C₃₆ aryl or a C₇-C₃₆ aralkyl radical
B) a radical of a polyalkylene oxide compound with a number average molar mass of less than 5000 g/mol
and can be saturated or unsaturated.

5. Addition compounds according to any one of claims 1 to 4, wherein at least two different compounds of formula (I) are used.

6. Addition compounds according to any one of claims 1 to 5, **characterised in that** they do not contain any unsaturated groups.

7. Addition compounds according to any one of claims 1 to 6, wherein hydroxy-functional polyethers, hydroxy-functional polyesters, hydroxy-functional polyether-polyesters and/or aliphatic and/or cycloaliphatic alcohols having 2 to 30 carbon atoms, the hydrogen atoms of which are possibly in part substituted by halogen and/or aryl radicals, are used as the compounds of formula (I).

8. Addition compounds according to any one of claims 1 to 7, **characterised in that** the polyisocyanates containing uretdione groups are cyclic dimerisation products of diisocyanates on the basis of hexamethylene diisocyanate, isophorone diisocyanate and/or toluene diisocyanate.

9. Use of at least one of the addition compounds of one or more of claims 1 to 8 in the preparation or processing of paints, printing inks, inks, paper coatings, leather and textile colours, pastes, pigment concentrates, ceramics, cosmetic preparations, casting masses and/or moulding masses based on synthetic, semisynthetic or natural macromolecular substances.

10. Use of at least one of the addition compounds of one of claims 1 to 8, for the preparation of pigment concentrates, paints, pastes and/or moulding masses containing pigments and/or fillers.

11. Use of at least one of the addition compounds of one of claims 1 to 8 for the preparation of a pigment paint, wherein a paint binder and/or solvent, pigments and possibly fillers, the addition compound and common paint additives are mixed together.

12. Use of an addition compound of one of claims 1 to 8 for the preparation of a pigmented coating on a substrate, wherein a pigment paint is prepared with the addition compound, wherein the pigment paint is applied to the substrate and wherein the pigment paint applied to the substrate is baked or cured or crosslinked.

13. Use of at least one of the addition compounds of one of claims 1 to 8, for the preparation of dispersable solids in powder particle and/or fibre particle form, in particular of dispersible pigments and fillers, wherein the particles are coated with the addition compound.

14. A method for the preparation of addition compounds, **characterised in that**
(A)
(a) one or more polyisocyanates containing uretdione groups are reacted with
(b) one or more compounds of formula (I)
Y-(XH)ₙ (I)
wherein
XH represents a group reactive to isocyanates
Y represents a monomeric or polymeric organic group not reactive to isocyanates and comprising one or more aliphatic, cycloaliphatic, araliphatic and/or aromatic groups,
wherein Y has a number average molar mass of less than 20000 g/mol, and n represents 1, 2 or 3, and
wherein n = 1 for at least 50 mol % of the compounds of formula (I),
on the condition that at least 50 % of the free isocyanate groups of the component (a) are reacted with the compounds of the formula (I) to obtain an intermediate product containing uretdione groups,
(B) the intermediate product is brought to react with
c) one or more compounds of the general formula (II)
Z-(NHR)ₘ (II),
wherein
R represents hydrogen, an aliphatic, cycloaliphatic, araliphatic and/or aromatic radical with up to 36 C atoms, or a polyoxyalkylene radical,
m represents 1, and
Z represents a non-basic radical with a number average molar mass of less than 10000 g/mol, and represents one or more of the following:
A) a C₁-C₅₀ alkyl radical that can be linear, branched, saturated or mono- or polyunsaturated, a C₄-C₃₆ cycloalkyl radical or
B) a C₆-C₃₆ aryl radical or a C₇-C₃₆ aralkyl radical or
C) a radical of a polyalkylene oxide compound or
D) a radical of a polysiloxane, possibly containing a polyether and/or polyester,
wherein Z can possibly contain the following functional groups:
- -OH
- -COOH
- -SO₃H
- -PO₃H₂
- -Si(OR)₃ and -SiR(OR)₂, and
(C) wherein hydroxyl groups present in the reaction product are optionally reacted with polyphosphoric acid or P₂O₅ or with polycarboxylic acids having at least two carboxyl groups or their anhydrides, in such a quantity that for each OH group to be reacted, at least 0.8 molecules of polycarboxylic acid or polycarboxylic acid anhydride are used and
(D) optionally the addition compounds are reacted with organic or inorganic bases,
on the condition that all possibly still free NCO groups and at least 20 % of the initially used uretdione groups are brought to react with Z-(NHR)ₘ.

## Revendications

1. Composés d'addition, **caractérisées en ce que** les composés d'addition peuvent êtres obtenues par réaction de
a) un ou plusieurs polyisocyanates contenant des groupes uretdione avec
b) un ou plusieurs composés de la formule (I)
Y-(XH)ₙ (I),
où
XH représente un groupe réactif aux isocyanates, et
Y représente un groupe organique monomère ou polymère et non réactif aux isocyanates qui comprend un ou plusieurs groupes aliphatiques, cycloaliphatiques, araliphatiques et/ou aromatiques,
dans lequel Y a une masse molaire moyenne en nombre inférieure à 20000 g/mol, et n représente 1, 2 ou 3, et
dans lequel n = 1 pour au moins 50 % en mole des composés de la formule (I),
à condition qu'au moins 50 % des groupes isocyanate libres du composant (a) sont réagis avec les composés de la formule (I) pour obtenir un produit intermédiaire contenant des groupes uretdione,
et ensuite le produit intermédiaire est mis à réagir avec
c) un ou plusieurs composés de la formule générale (II)
Z-(NHR)ₘ (II),
où
R représente l'hydrogène, un groupement aliphatique, cycloaliphatique, araliphatique et/ou aromatique avec jusqu'à 36 atomes de carbone, ou un groupement polyoxyalkylène,
m représente 1, et
Z représente un groupement non-basique avec une masse molaire moyenne en nombre inférieure à 10000 g/mol, et a l'une ou plusieurs des significations suivantes :
A) un groupement alkyle en C₁-C₅₀ qui peut être linéaire, branché, saturé ou mono- ou polyinsaturé, un groupement cycloalkyle en C₄-C₃₆ ou
B) un groupement aryle en C₆-C₃₆ ou un groupement aralkyle C₇-C₃₆ ou
C) un groupement d'un composé polyalkylène oxide ou
D) un groupement d'un polysiloxane, le cas échéant contenant un polyéther et/ou polyester,
où Z le cas échéant peut comprendre les groupes fonctionnels suivants:
- -OH
- -COOH
- -SO₃H
- -PO₃H₂
- -Si(OR)₃ et -SiR(OR)₂,
où les groupes hydroxyle sont réagis, le cas échéant, avec de l'acide polyphosphorique ou P₂O₅, ou avec des acides polycarboxyliques avec au moins deux groupes carboxyle, ou leurs anhydrides, en une quantité tant qu'au moins 0,8 molécules d'acide polycarboxylique ou d'anhydride d'acide polycarboxylique sont utilisés pour chaque groupe OH à réagir ;
et les sels des composés d'addition,
à condition que tous les groupes NCO libres le cas échéant encore présents, et au moins 20 % des groupes uretdiones utilisés au départ sont mis à réagir avec Z-(NHR)ₘ.

2. Composés d'addition selon la revendication 1, dans lesquels XH représente les groupements -OH, -NH₂, -NHR, -SH ou- COOH, de préférence-OH, -NH₂ ou -NHR.

3. Composés d'addition selon la revendication 1 ou 2, dans lesquels Y contient, le cas échéant, les hétéroatomes O, S, Si et/ou N, et/ou des groupes éther, uréthane, carboxyle, amide, siloxane et/ou ester, et l'hydrogène est substitué, le cas échéant, par des halogènes.

4. Composés d'addition selon l'une quelconque des revendications 1 à 3, dans lesquels R a l'une ou plusieurs des significations suivantes:
A) hydrogène, un groupement alkyle en C₁-C₃₆, un groupement cycloalkyle en C₄-C₃₆, un groupement aryle en C₆-C₃₆ ou un groupement aralkyle en C₇-C₃₆, ou
B) un groupement d'un composé polyalkylène oxide avec une masse molaire moyenne en nombre inférieure à 5000 g/mol,
et peut être saturé ou insaturé.

5. Composés d'addition selon l'une quelconque des revendications 1 à 4, dans lesquels au moins deux composés différents de la formule (I) sont utilisés.

6. Composés d'addition selon l'une quelconque des revendications 1 à 5, **caractérisés en ce qu'**ils ne comprennent pas des groupes insaturés.

7. Composés d'addition selon l'une quelconque des revendications 1 à 6, dans lesquels les composés de la formule (I) sont des polyéthers hydroxyfonctionnels, des polyesters hydroxyfonctionnels, des polyéther-polyesters hydroxyfonctionnels et/ou des alcools aliphatiques et/ou cycloaliphatiques avec 2 bis 30 atomes de carbone, dont les atomes de hydrogène sont partiellement substitués, le cas échéant, par des halogènes et/ou des groupements aryle.

8. Composés d'addition selon une ou plusieurs des revendications 1 à 7, **caractérisés en ce que** les polyisocyanates contenant des groupes uretdione sont des produits de dimérisation des diisocyanates à base de diisocyanate d'hexaméthylène, diisocyanate d'isophorone et/ou diisocyanate de toluylène.

9. Utilisation d'au moins un composé d'addition selon l'une des revendications 1 à 8 dans la fabrication ou le traitement des vernis, couleurs d'imprimerie, encres, couchage du papier, teintures de cuir et textiles, pâtes, concentrés de pigments, céramiques, préparations cosmétiques, masses de coulée et/ou masses de moulage à base des matières synthétiques, matières semi-synthétiques ou matières macromoléculaires naturelles.

10. Utilisation d'au moins un des composés d'addition selon l'une des revendications 1 à 8, pour la fabrication des concentrés de pigments, vernis et peintures, pâtes et/ou masses de moulage contenant des pigments et/ou matériaux de remplissage.

11. Utilisation d'au moins un des composés d'addition selon l'une des revendications 1 à 8, pour la fabrication d'un vernis à pigments, dans laquelle un liant de vernis et/ou un solvant, des pigments et le cas échéant des matériaux de remplissage, le composé d'addition et des auxiliaires pour vernis sont mélangés.

12. Utilisation d'un composé d'addition selon l'une des revendications 1 à 8, pour la fabrication d'un revêtement pigmenté sur un substrat, dans laquelle un vernis à pigments est fabriqué avec le composé d'addition, le vernis à pigments étant appliqué sur le substrat et le vernis à pigments appliqué sur le substrat étant recuit ou durci ou réticulé.

13. Utilisation d'au moins un des composés d'addition selon l'une des revendications 1 à 8 pour la fabrication des matières solides sous forme de particules pulvérulentes et/ou de particules fibreuses dispersables, notamment des pigments ou des matériaux de remplissage dispersables, les particules étant revêtues avec le composé d'addition.

14. Procédé pour la fabrication des composés d'addition, **caractérisé en ce que**
(A)
(a) un ou plusieurs polyisocyanates contenant des groupes uretdione sont réagis avec
(b) un ou plusieurs composés de la formule (I)
Y-(XH)ₙ (I),
où
XH représente un groupe réactif aux isocyanates, et
Y représente un groupe organique monomère ou polymère et non réactif aux isocyanates qui comprend un ou plusieurs groupes aliphatiques, cycloaliphatiques, araliphatiques et/ou aromatiques,
dans lequel Y a une masse molaire moyenne en nombre inférieure à 20000 g/mol, et n représente 1, 2 ou 3,et
dans lequel n = 1 pour au moins 50 % en mole des composés de la formule (I), à condition qu'au moins 50 % des groupes isocyanate libres du composant (a) sont réagis avec les composés de la formule (I) pour obtenir un produit intermédiaire contenant des groupes uretdione,
(B) le produit intermédiaire est mis à réagir avec
c) un ou plusieurs composés de la formule générale (II)
Z-(NHR)ₘ (II),
où
R représente l'hydrogène, un groupement aliphatique, cycloaliphatique, araliphatique et/ou aromatique avec jusqu'à 36 atomes de carbone, ou un groupement polyoxyalkylène,
m représente 1, et
Z représente un groupement non-basique avec une masse molaire moyenne en nombre inférieure à 10000 g/mol, et a l'une ou plusieurs des significations suivantes :
A) un groupement alkyle en C₁-C₅₀ qui peut être linéaire, branché, saturé ou mono- à polyinsaturé, un groupement cycloalkyle en C₄-C₃₆ ou
B) un groupement aryle en C₆-C₃₆ ou un groupement aralkyle C₇-C₃₆ ou
C) un groupement d'un composé polyalkylène oxide ou
D) un groupement d'un polysiloxane, le cas échéant contenant un polyéther et/ou polyester,
où Z le cas échéant peut comprendre les groupes fonctionnels suivants:
- -OH
- -COOH
- -SO₃H
- -PO₃H₂
- -Si(OR)₃ et -SiR(OR)₂, et
(C) les groupes hydroxyle présents dans le produit de réaction sont optionnellement réagis, avec de l'acide polyphosphorique ou P₂O₅, ou avec des acides polycarboxyliques avec au moins deux groupes carboxyle, ou leurs anhydrides, en une quantité tant qu'au moins 0,8 molécules d'acide polycarboxylique ou d'anhydride d'acide polycarboxylique sont utilisés pour chaque groupe OH à réagir, et
(D) optionnellement les composés d'addition sont réagis avec des bases organiques ou inorganiques,
à condition que tous les groupes NCO libres le cas échéant encore présents, et au moins 20 % des groupes uretdiones utilisés au départ sont mis à réagir avec Z-(NHR)ₘ.
